(19) Europäisches Patentamt
European Patent Office
Office européen des brevets

(11) **EP 4 694 075 A1**

(12) **EUROPEAN PATENT APPLICATION**
published in accordance with Art. 153(4) EPC

(43) Date of publication:
**11.02.2026 Bulletin 2026/07**

(21) Application number: **23934634.9**

(22) Date of filing: **28.04.2023**

(51) International Patent Classification (IPC):
**H04L 47/10** (2022.01)     **G06N 3/02** (2006.01)

(52) Cooperative Patent Classification (CPC):
**G06N 3/02; H04L 47/10**

(86) International application number:
**PCT/CN2023/091756**

(87) International publication number:
**WO 2024/221442 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **YANG, Yu
Shenzhen, Guangdong 518129 (CN)**
• **REN, Xiaozhe
Shenzhen, Guangdong 518129 (CN)**
• **HU, Zhongzhe
Shenzhen, Guangdong 518129 (CN)**
• **SHI, Shaohuai
Harbin, Heilongjiang 150001 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND RELATED DEVICE**

(57)     A data processing method and a related device are provided, and may be applied to the field of large models in the field of artificial intelligence. The method includes: obtaining first data; and determining a value of r based on a first parameter and/or a second parameter, where r indicates to divide the first data into r pieces of sub-data, the r pieces of sub-data are separately processed by a neural network layer in a machine learning model, a processing process of the first data is divided into tasks of sending the r pieces of sub-data, tasks of processing the r pieces of sub-data, and tasks of sending processing results of the r pieces of sub-data, and time occupied by tasks can overlap. The first parameter indicates a network status of a communication network used to send the sub-data, and the second parameter indicates a load status of a communication node configured to process the sub-data. In this case, the value of r is determined based on the network status and/or the load status of the communication node. This helps obtain a value of r that satisfies an actual situation. In this way, time consumed in one data processing process of the entire first data is shortened.

FIG. 5

**Description**

## TECHNICAL FIELD

This application relates to the field of artificial intelligence, and in particular, to a data processing method and a related device.

## BACKGROUND

With development of artificial intelligence (Artificial Intelligence, AI) technologies, a trillion-level large model is launched. The entire trillion-level large model may include at least one neural network module, and a first neural network module in the at least one neural network module may be deployed on a plurality of communication nodes. When any communication node (referred to as a "first communication node" below for ease of description) of the plurality of communication nodes processes first data through a neural network layer in the first neural network module, the first communication node needs to first send the first data to another communication node in the plurality of communication nodes. After the another communication node processes the first data to obtain a processing result, the another communication node sends the processing result to the first communication node.

Currently, the foregoing three steps are in a serial relationship. To be specific, the first communication node sends the entire first data to the another communication node, the another communication node processes the entire first data to obtain the processing result of the entire first data, and the another communication node sends the processing result of the entire first data to the first communication node. It is time-consuming for the first neural network module to perform one time of data processing on the entire first data.

## SUMMARY

Embodiments of this application provide a data processing method and a related device, to divide entire first data into r pieces of sub-data, and make time occupied by tasks of sending the r pieces of sub-data and time occupied by tasks of sending processing results of the r pieces of sub-data overlap time occupied by tasks of processing the r pieces of sub-data. This helps shorten time consumed in one data processing process of the first data. A value of r is determined based on a network status and/or a data processing load of a communication node. This helps obtain a value of r that satisfies an actual situation, to further shorten time consumed in one data processing process of the entire first data.

To resolve the foregoing technical problem, embodiments of this application provide the following technical solutions.

According to a first aspect, an embodiment of this application provides a data processing method, which may be applied to the field of large models in the field of artificial intelligence. A plurality of neural network layers in a first neural network module included in a first machine learning model may be deployed on a plurality of communication nodes included in a same communication node cluster. The method includes: A first communication node in the plurality of communication nodes obtains first data. The first communication node determines a value of r based on a first parameter and/or a second parameter, where r indicates to divide the first data into r pieces of sub-data, the r pieces of sub-data are separately processed by a neural network layer in the machine learning model, and r is an integer greater than or equal to 1. In other words, a processing task of the first data is divided into tasks of sending the r pieces of sub-data, tasks of processing the r pieces of sub-data, and tasks of sending processing results of the r pieces of sub-data.

The first parameter indicates a network status of a communication network used to send the sub-data, namely, a network status of a communication network used to execute a task of sending each piece of sub-data and a task of sending a processing result of the piece of sub-data. The communication network may be a network used when different communication nodes in the communication node cluster configured to deploy the first neural network module communicate with each other. The second parameter indicates a data processing load status of the communication node configured to process the sub-data, to reflect duration consumed when the communication node that processes the sub-data executes the task of processing each piece of sub-data.

In this implementation, the entire first data is divided into the r pieces of sub-data, and the r pieces of sub-data are separately processed by the neural network layer in the machine learning model. In other words, the processing process of the entire first data is divided into the tasks of sending the r pieces of sub-data, the tasks of processing the r pieces of sub-data, and the tasks of sending the processing results of the r pieces of sub-data. Time occupied by the tasks of sending the r pieces of sub-data and time occupied by the tasks of sending the processing results of the r pieces of sub-data can overlap time occupied by the tasks of processing the r pieces of sub-data. This helps shorten time consumed in one data processing process of the first data. In addition, the first parameter indicates the network status of the communication network used to send the sub-data, and the second parameter indicates the load status of the communication node configured to process the sub-data. In this case, the value of r is determined based on the network status and/or the data processing load status of the communication node. This helps obtain a value of r that satisfies an actual situation. In this way, time consumed in one data processing process of the entire first data is further shortened.

In a possible implementation, the first parameter includes first start duration and first duration. The first start duration indicates duration from determining a data sending task to executing the data sending task. The first start duration may also be understood as communication start duration. The "data sending task" may be a task of sending any piece of sub-data in the r pieces of sub-data or a task of sending a processing result of any piece of sub-data. The first duration indicates duration required for sending data of a first data amount. The first data amount may also be understood as a unit data amount, and indicates a data size. For example, the first data amount may be 1 MB (megabyte), 512 KB (kilobytes), another size, or the like.

The first parameter includes second start duration and second duration. The second start duration indicates duration from determining a data processing task to executing the data processing task. The second start duration may also be understood as processing start duration. The data processing task indicates processing data through a neural network layer in the first neural network module included in the first machine learning model. The "data processing task" indicates a task of processing any piece of sub-data in the r pieces of sub-data of the data through the neural network layer in the first neural network module included in the first machine learning model. The second duration indicates duration required for processing data of a second data amount through the neural network layer in the first machine learning model. A concept of the second data amount is similar to that of the first data amount. Values of the second data amount and the first data amount may be the same or different.

In this implementation, the value of r is determined based on the first start duration, the first duration, the second start duration, and the second duration. Depending on the first start duration, the first duration, the second start duration, and the second duration, time consumed in each phase of one data processing process of the entire first data can be accurately reflected. This helps obtain optimal r, to further shorten time consumed in one data processing process of the entire first data.

In a possible implementation, that the first communication node determines the value of r based on the first parameter and/or the second parameter includes: The first communication node solves a target function based on the first parameter and/or the second parameter, to determine the value of r, where the target function indicates total duration consumed in obtaining the processing results of the r pieces of sub-data, that is, the target function may be obtained through modeling performed on total duration consumed in executing the tasks of sending the r pieces of sub-data, the tasks of processing the r pieces of sub-data, and the tasks of sending the processing results of the r pieces of sub-data. A solving objective of the target function may be that a value of the target function is the smallest. A constraint condition of the target function is related to the time occupied by the tasks of sending the sub-data and the time occupied by the tasks of processing the sub-data.

In this implementation, the target function indicates the total duration consumed in obtaining the processing results of the r pieces of sub-data, and the constraint condition of the target function is related to the time occupied by the tasks of sending the sub-data and the time occupied by the tasks of processing the sub-data. In other words, the total duration consumed in obtaining the processing results of the r pieces of sub-data can be accurately reflected based on the target function. A process of determining r is converted into a process of solving the target function. This improves fineness of the process of determining r, and helps obtain an optimal value of r, to further shorten total duration consumed in an entire process of processing the first data.

In a possible implementation, the target function includes one or more of a first target function, a second target function, or a third target function. A constraint condition of the first target function includes that time occupied by a task of sending one piece of sub-data is greater than or equal to time occupied by a task of processing the piece of sub-data. A constraint condition of the second target function includes that time occupied by a task of sending one piece of sub-data is less than time occupied by a task of processing the piece of sub-data, and second time is not a subset of first time, where the first time includes the time occupied by the tasks of processing the r pieces of sub-data, and the second time includes the time occupied by the tasks of sending the r pieces of sub-data and the time occupied by the tasks of sending the processing results of the r pieces of sub-data. A constraint condition of the third target function includes that time occupied by a task of sending one piece of sub-data is less than time occupied by a task of processing the piece of sub-data, and the second time is a subset of the first time.

In this implementation, the three target functions (the first target function, the second target function, and the third target function) indicate the total duration consumed in obtaining the processing results of the r pieces of sub-data. The constraint condition of the first target function, the constraint condition of the second target function, and the constraint condition of the third target function are different, that is, a process of determining the value of r is divided into three cases. The foregoing three cases are separately described by using the first target function and the constraint condition of the first target function, the second target function and the constraint condition of the second target function, and the third target function and the constraint condition of the third target function, to determine the value of r at a finer level. This helps obtain a better solution of r, and helps further shorten time consumed in one data processing process of the entire first data.

In a possible implementation, that the first communication node solves the target function based on the first parameter and/or the second parameter, to determine the value of r may include: After determining the first start duration, the first duration, the second duration, the second duration, and a data amount of the first data, the first communication node may determine, based on the data amount of the first data, a first ratio of a total data amount of r data packets corresponding to the r pieces of sub-data to the first data amount, and a second ratio of the data amount of the first data to the second data amount, to solve the first target function, the second target function, and/or the third target function based on the first start duration, the first duration, the second duration, the second duration, the first ratio, and the second ratio, so as to determine the value of r.

In a possible implementation, that the first communication node solves the first target function, the second target function, and/or the third target function based on the first start duration, the first duration, the second duration, the second duration, the first ratio, and the second ratio, to determine the value of r may include: The first communication node separately solve the first target function, the second target function, and the third target function by substituting the first start duration, the first duration, the second duration, the second duration, the first ratio, and the second ratio into the first target function and the constraint condition of the first target function, the second target function and the constraint condition of the second target function, and the third target function and the constraint condition of the third target function, so that an r value corresponding to the first target function, an r value corresponding to the second target function, and an r value corresponding to the third target function can be separately obtained. The first communication node may obtain a value of r corresponding to a target function whose value is the smallest in the first target function, the second target function, and the third target function, and determine the obtained value of r as the value of r.

In a possible implementation, that the first communication node solves the first target function, the second target function, and/or the third target function based on the first start duration, the first duration, the second duration, the second duration, the first ratio, and the second ratio, to determine the value of r may include: The first communication node may select, from the first target function, the second target function, and the third target function based on the first start duration, the first duration, the second duration, and the second duration, a target function that matches "the first start duration, the first duration, the second duration, and the second duration", and solve the selected target function by substituting the first start duration, the first duration, the second duration, the second duration, the first ratio, and the second ratio into the selected target function and a constraint condition of the target function, to obtain a value of r.

In a possible implementation, the first machine learning model includes at least one neural network module, and a plurality of neural network layers included in a first neural network module in the at least one neural network module are deployed in a same communication node cluster; and for a plurality of communication nodes included in the communication node cluster, first parameters are the same and second parameters are the same.

In this implementation, because there is a high probability that communication loads of different communication nodes in the communication node cluster configured to deploy the first neural network module are similar, deploying a same first parameter in the different communication nodes satisfies an actual communication situation. The foregoing solution helps reduce difficulty in a process of "determining first parameters deployed in a plurality of communication nodes". Quantities of neural network layers deployed on different communication nodes in the communication node cluster configured to deploy the first neural network module are usually the same, and there is a high probability that data processing load amounts on the different communication nodes are similar. In this case, deploying a same second parameter in the different communication nodes satisfies an actual situation. The foregoing solution helps reduce difficulty in a process of "determining second parameters deployed in a plurality of communication nodes". In addition, because first parameters and second parameters in different communication nodes are used in a process of determining the value of r, deploying a same first parameter and a same second parameter in the different communication nodes also helps reduce complexity of the process of determining the value of r.

In a possible implementation, the first duration indicates duration required for sending the data of the first data amount in an all to all (all to all) communication mode. For example, that the all to all communication mode is used may include: When the first communication node in the communication node cluster sends data to a second communication node, the first communication node may invoke an interface with an all to all communication function to participate in queuing. When it is a turn to execute a data sending task of the first communication node, each communication node in the communication node cluster sends a data packet to another communication node in the communication node cluster. In other words, a plurality of data packets are sent between a plurality of communication nodes included in the communication node cluster. The plurality of data packets include a plurality of first data packets including valid data, and the first data packet is a data packet sent by the first communication node to the second communication node. Optionally, the plurality of data packets may further include a second data packet, the second data packet is a data packet other than the first data packet in the plurality of data packets, and the second data packet may include invalid data.

In this implementation, an exact communication mode used when different communication nodes in the communication node cluster communicate with each other is provided, to improve a degree of combination between this solution and an actual application.

In a possible implementation, the first machine learning model is a mixture of expert (mixture of expert, MoE) model, the first neural network module in the first machine learning model may be represented as a MoE module in the MoE model, and each MoE module may include a gate (gate) neural network layer and a plurality of expert (expert) neural network layers. The second duration indicates duration required for processing the data of the second data amount through each expert neural network layer in the MoE module included in the MoE model. In this implementation, the first machine learning model is determined as the MoE model. In other words, a specific application scenario of the method provided in this application is provided. This improves a degree of combination between this solution and a specific application scenario. In addition, a degree of matching between the MoE model and the method provided in this application is high. This helps greatly shorten time consumed by the MoE model in a data processing process.

In a possible implementation, the first parameter is obtained through statistics collection on a plurality of data sending tasks that are executed in an all to all communication mode, and data sending tasks with different data amounts exist in the plurality of data sending tasks. In this implementation, different communication nodes communicate with each other in an all to all communication mode, so that a probability that first parameters corresponding to the different communication nodes are consistent is further improved. In this case, the first parameter obtained through statistics collection on the plurality of data sending tasks that are executed in an all to all communication mode is more appropriate to an actual communication status in the communication node cluster, so that a process of determining r is consistent with the actual communication status.

In a possible implementation, the second parameter is obtained through statistics collection on a plurality of data processing tasks that are executed through the neural network layer in the first machine learning model, and data of different data amounts is processed in the plurality of data processing tasks. In this implementation, a solution for determining the second parameter is provided, to reduce implementation difficulty of the method provided in this application. In addition, the second parameter is obtained through statistics collection on the plurality of data processing tasks, and the data of the different data amounts is processed in the plurality of data processing tasks. In this way, the determined second parameter can be compatible with data processing tasks with various data amounts, and an optimal value of r can be obtained in the data processing tasks with the various data amounts.

In a possible implementation, the first parameters deployed in the plurality of communication nodes included in the communication node cluster configured to deploy the first neural network module are adjustable. For example, first start duration, first duration, second start duration, and second duration that are deployed in the plurality of communication nodes included in the communication node cluster configured to deploy the first neural network module are adjustable.

In a possible implementation, that the r pieces of sub-data are separately processed by the neural network layer in the first machine learning model includes: In an inference phase of the first machine learning model, the r pieces of sub-data are separately processed by the neural network layer in the first machine learning model; or in a training phase of the first machine learning model, the r pieces of sub-data are separately processed by the neural network layer in the first machine learning model.

In this implementation, the data processing method provided in this application may be used in both the inference phase and the training phase of the first machine learning model. This extends an application scenario of this solution, shortens duration occupied for data processing in the inference phase and the training phase of the first machine learning model, and helps improve data processing efficiency in the inference phase and the training phase of the first machine learning model.

According to a second aspect, an embodiment of this application provides a data processing apparatus, which may be used in the field of large models in the field of artificial intelligence. The data processing apparatus includes: an obtaining module, configured to obtain first data; and a determining module, configured to determine a value of r based on a first parameter and/or a second parameter, where r indicates to divide the first data into r pieces of sub-data, the r pieces of sub-data are separately processed by a neural network layer in a machine learning model, r is an integer greater than or equal to 1, the first parameter indicates a network status of a communication network used to send the sub-data, and the second parameter indicates a load status of a communication node configured to process the sub-data.

In the second aspect of this application, the data processing apparatus may be further configured to perform the steps performed by the first communication node in the first aspect and the possible implementations of the first aspect. For specific implementations of the steps, meanings of nouns, and beneficial effect of the possible implementations of the second aspect, refer to the first aspect. Details are not described herein again.

According to a third aspect, an embodiment of this application provides a communication node. The communication node includes a processor, and the processor is configured to perform the data processing method according to the first aspect.

According to a fourth aspect, an embodiment of this application provides an electronic device. The electronic device includes a processor and a memory. The processor is coupled to the memory. The memory is configured to store a program. The processor is configured to execute the program in the memory, so that the electronic device performs the data processing method according to the first aspect.

According to a fifth aspect, an embodiment of this application provides a computer-readable storage medium. The computer-readable storage medium stores a computer program. When the computer program is run on a computer, the computer is enabled to perform the data processing method according to the first aspect.

According to a sixth aspect, an embodiment of this application provides a computer program product. The computer program product includes a program. When the program is run on a computer, the computer is enabled to perform the data processing method according to the first aspect.

According to a seventh aspect, this application provides a chip system. The chip system includes a processor, configured to support a communication node or an electronic device in implementing the functions in the foregoing aspects, for example, sending or processing the data and/or information in the foregoing method. In a possible design, the chip system further includes a memory. The memory is configured to store program instructions and data that are necessary for a terminal device or a communication device. The chip system may include a chip, or may include a chip and another discrete component.

## BRIEF DESCRIPTION OF DRAWINGS

FIG. 1 is a diagram of a structure of an artificial intelligence main framework according to an embodiment of this application;

FIG. 2 is a diagram of deploying a first neural network module in a first machine learning model on a communication node cluster according to an embodiment of this application;

FIG. 3 is a diagram of a system architecture of a data processing system according to an embodiment of this application;

FIG. 4 is a diagram of three cases of total duration occupied by one data processing process of processing first data through a first neural network module according to an embodiment of this application;

FIG. 5 is a schematic flowchart of a data processing method according to an embodiment of this application;

FIG. 6 is a diagram of a relationship between a first machine learning model and a first neural network module according to an embodiment of this application;

FIG. 7 is a diagram of deploying a MoE module in a MoE model on a communication node cluster according to an embodiment of this application;

FIG. 8 is a diagram of an all to all communication mode used between different communication nodes in a communication node cluster according to an embodiment of this application;

FIG. 9 is a diagram of a relationship between time occupied by tasks of sending r pieces of sub-data, time occupied by tasks of sending processing results of the r pieces of sub-data, and time occupied by tasks of processing the r pieces of sub-data according to an embodiment of this application;

FIG. 10 is another diagram of a relationship between time occupied by tasks of sending r pieces of sub-data, time occupied by tasks of sending processing results of the r pieces of sub-data, and time occupied by tasks of processing the r pieces of sub-data according to an embodiment of this application;

FIG. 11 is another diagram of a relationship between time occupied by tasks of sending r pieces of sub-data, time occupied by tasks of sending processing results of the r pieces of sub-data, and time occupied by tasks of processing the r pieces of sub-data according to an embodiment of this application;

FIG. 12 is a schematic flowchart of a data processing method according to an embodiment of this application;

FIG. 13 is a diagram of a structure of a data processing apparatus according to an embodiment of this application;

FIG. 14 is a diagram of a structure of an electronic device according to an embodiment of this application; and

FIG. 15 is a diagram of a structure of a chip according to an embodiment of this application.

## DESCRIPTION OF EMBODIMENTS

The following describes embodiments of this application with reference to the accompanying drawings. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

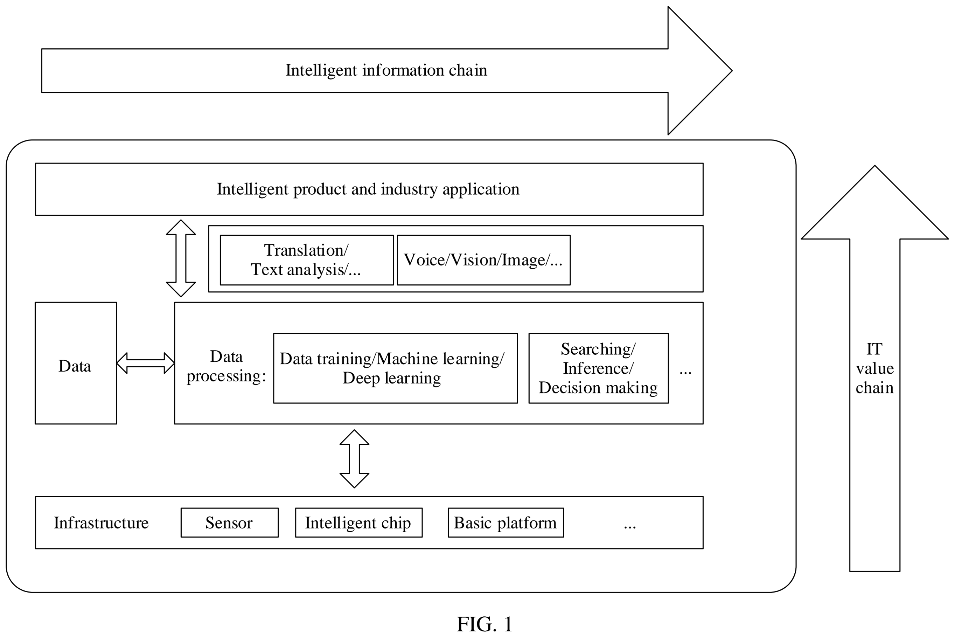

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for an artificial intelligence system, implements communication with the external world, and implements support by using a basic platform. The infrastructure communicates with the outside through a sensor. A computing capability is provided by an intelligent chip. The intelligent chip may be specifically a hardware acceleration chip like a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computing.

(2) Data

Data at an upper layer of an infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control policy. A typical function is searching and matching.
Decision-making is a process of making a decision after intelligent information is inferred, and usually provides functions such as classification, ranking, and prediction.

(4) General capability

After data processing mentioned above is performed on data, some general capabilities may further be formed based on a data processing result. For example, the general capabilities may be an algorithm or a general system, for example, translation, text analysis, computer vision processing, speech recognition, and image recognition.

(5) Intelligent product and industry application

The intelligent product and the industry application are products and application of an artificial intelligence system in various fields, are encapsulation of an overall artificial intelligence solution, and implement productization and practical application of intelligent information decision-making. Application fields thereof include intelligent terminals, intelligent manufacturing, intelligent transportation, an intelligent home, intelligent healthcare, intelligent security protection, autonomous driving, a smart city, and the like.
This application may be applied to various fields in the field of artificial intelligence, and optionally, may be applied to a scenario in which a large first machine learning model is used for data processing. For example, the first machine learning model may be a trillion-level machine learning model. This is not limited herein. For example, the first machine learning model may be applied to fields that need to be implemented through a machine learning model, for example, a natural language synthesis task related to speech and semantics, a visual perception task, and an audio and video processing task. The following provides examples of a plurality of application scenarios of this application.

Application scenario 1: natural language processing (natural language processing, NLP)

Natural language processing is processing of a human language. Natural language processing is a process of performing systematic analysis, understanding, and information extraction on text data through a first machine learning model. In fields such as an intelligent terminal and an intelligent home, a natural language processing task may be executed through the first machine learning model. Through the first machine learning model, massive chunks of text data can be managed, or a large quantity of automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

For example, there may be the following several types of natural language processing tasks.

Sequence tagging: A model needs to provide a classification category for each word in a sentence based on context. For example, sequence tagging is Chinese word segmentation, part-of-speech tagging, named entity recognition, or semantic role labeling.

Classification task: A classification value is output for an entire sentence. For example, the classification task is text classification.

Sentence relation inference: Two sentences are given, and it is determined whether the two sentences have a nominal relation. For example, the sentence relation inference is a question answering system, semantic rewriting, and natural language inference.

Generative task: One piece of text is output, and another piece of text is generated. For example, the generative task is machine translation, text summarization, poem writing and sentence making, or picture description.

Application scenario 2: object detection

For example, in the autonomous driving field, an autonomous vehicle may collect, by using a sensor, point cloud data corresponding to an ambient environment of the autonomous vehicle, and perform target detection based on the collected point cloud data through a first machine learning model, to obtain a prediction result corresponding to the point cloud data. The prediction result indicates a location of at least an object in the ambient environment of the autonomous vehicle. The autonomous vehicle may plan a traveling path of the autonomous vehicle based on the prediction result. The vehicle may be a car, a truck, a motorcycle, a bus, a boat, an airplane, a helicopter, a recreational vehicle, a playground vehicle, a construction device, a trolley, a golf cart, a train, or the like. This is not specifically limited in embodiments of this application.

For another example, in the field of intelligent surveillance, many cameras are mounted in a public place and on a traffic road. After collecting image information of an ambient environment, a few intelligent cameras can perform a target detection task and the like on the collected image through the first machine learning model. In a plurality of application fields, there may be a requirement for performing target detection on an image through the first machine learning model. Details are not listed one by one herein.

Application scenario 3: Semantic segmentation is performed on an image.

The semantic segmentation (semantic segmentation) means that all pixels in an image are classified through a first machine learning model, and the first machine learning model may be compressed according to a model quantization method provided in this application. In fields such as an intelligent terminal and intelligent healthcare, there may be a requirement for performing semantic segmentation on an image through the first machine learning model.

It should be noted that the data processing method provided in this application may be further applied to another scenario in which data processing is performed through the first machine learning model. The foregoing examples of various application scenarios of this application are merely for ease of understanding of this solution, and are not intended to limit this solution.

The first machine learning model in this application may include one or more first neural network modules, each first neural network module includes a plurality of neural network layers, and the plurality of neural network layers included in each first neural network module are deployed on a same communication node cluster. In other words, the plurality of neural network layers included in the first neural network module are deployed on a plurality of communication nodes included in the same communication node cluster. Optionally, the first machine learning model may further include a second neural network module, and each neural network layer included in the second neural network module is deployed on one communication node.

Each communication node may include one or more processors. For example, one communication node may be represented as an NPU, a CPU, a GPU, a network adapter, another product form, or the like. Alternatively, each communication node may be represented as a virtualized device deployed on a physical device, for example, a virtual machine (virtual machine, VM). A product form of each communication node may be flexibly determined with reference to an actual application scenario. This is not limited in embodiments of this application.

A plurality of communication nodes configured to deploy the first machine learning model may be included in a same electronic device. For example, the electronic device may be represented as a server, represented as a server cluster including a plurality of servers, or the like. A specific product form may be determined with reference to an actual application scenario. This is not limited in embodiments of this application.

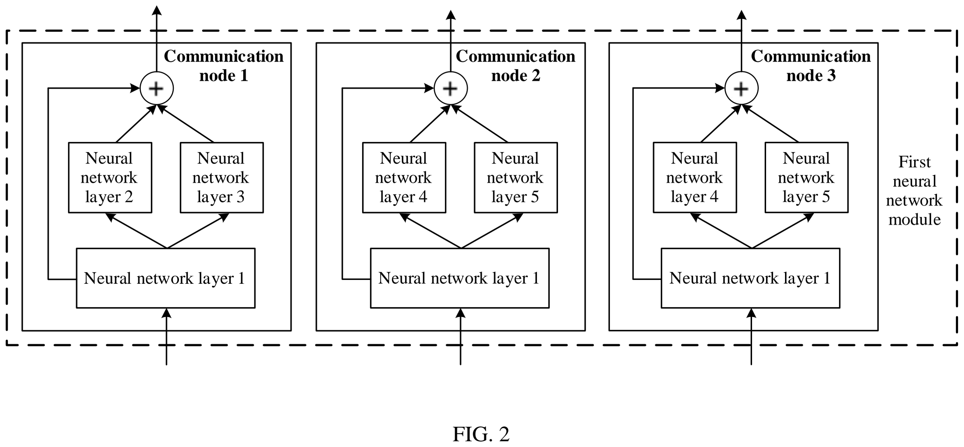

For more intuitive understanding of this solution, refer to FIG. 2. FIG. 2 is a diagram of deploying a first neural network module in a first machine learning model on a communication node cluster according to an embodiment of this application. In FIG. 2, an example in which the communication node cluster includes three communication nodes is used. A neural network layer 1, a neural network layer 2, and a neural network layer 3 are deployed on a communication node 1. The neural network layer 1, a neural network layer 4, and a neural network layer 5 are deployed on a communication node 2. The neural network layer 1, a neural network layer 6, and a neural network layer 7 are deployed on a communication node 3. All neural network layers deployed on the communication node 1, the communication node 2, and the communication node 3 form the first neural network module in the first machine learning model. It should be noted that the first neural network module may include more or fewer neural network layers, and the neural network layers included in the first neural network module may be deployed in more or fewer communication nodes. The example in FIG. 2 is merely for ease of understanding of this solution, and is not intended to limit this solution.

When data processing needs to be performed on first data through a first neural network module in the first machine learning model, because a plurality of neural network layers included in the first neural network module are deployed on a plurality of communication nodes included in one communication node cluster, after the first data arrives at a first communication node in the plurality of communication nodes, a neural network layer for processing the first data may be deployed on a communication node (referred to as a "second communication node" below for ease of description) other than the first communication node. A currently used method is as follows: The first communication node first sends the entire first data to the second communication node; the second communication node processes the first data to obtain a processing result of the first data; and then, the second communication node sends the processing result of the first data to the first communication node. It is time-consuming for the first neural network module to perform one time of data processing on the entire first data.

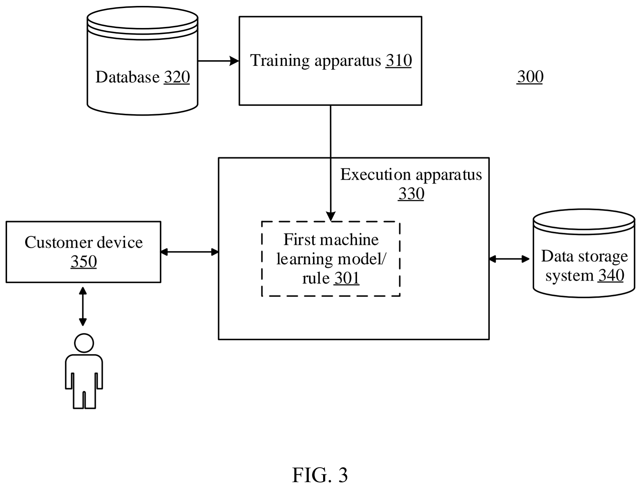

Before the data processing method provided in this application is described, refer to FIG. 3. FIG. 3 is a diagram of a system architecture of a data processing system according to an embodiment of this application. In FIG. 3, a data processing system 300 includes a training apparatus 310, a database 320, an execution apparatus 330, a data storage system 340, and a customer device 350.

The database 320 stores a training data set. The training apparatus 310 generates a first machine learning model/rule 301, and performs iterative training on the first machine learning model/rule 301 based on the training data set, to obtain a trained first machine learning model/rule 301.

The trained first machine learning model/rule 301 obtained by the training apparatus 310 may be applied to the execution apparatus 330. The execution apparatus 330 may invoke data, code, and the like in the data storage system 340, and may also store data, instructions, and the like in the data storage system 340. The data storage system 340 may be disposed in the execution apparatus 330, or the data storage system 340 may be an external memory relative to the execution apparatus 330.

In some embodiments of this application, as shown in FIG. 3, the execution apparatus 330 and the customer device 350 may be independent of each other. The execution apparatus 330 is configured with an input/output (I/O) interface, and exchanges data with the customer device 350. A "user" may input to-be-processed data through the customer device 350. The customer device 350 sends the to-be-processed data to the execution apparatus 330 through the I/O interface. After generating, through the first machine learning model/rule 301, prediction information corresponding to the to-be-processed data, the execution apparatus 330 may return the prediction information to the customer device 350 through the I/O interface, to provide the prediction information for the user.

It should be noted that FIG. 3 is merely the diagram of the architecture of two data processing systems according to embodiments of the present invention, and location relationships between devices, components, modules, and the like shown in the figure constitute no limitation.

For example, because the first machine learning model/rule 301 is large, and each first neural network module in the first machine learning model/rule 301 is deployed on a plurality of communication nodes, both the training apparatus 310 and the execution apparatus 330 may include a plurality of communication nodes. In both an inference phase and a training phase of the first machine learning model/rule 301, there is a problem that it is excessively time-consuming for the first neural network module in the first machine learning model/rule 301 to perform one time of data processing on the first data.

To shorten time consumed by the first neural network module in the first machine learning model/rule 301 to perform one time of data processing on the first data, this application provides a data processing method. When the first data needs to be processed by the first neural network module in the first machine learning model/rule 301, the first data may be divided into r pieces of sub-data, and the r pieces of sub-data are separately processed through a neural network layer in the first neural network module, to obtain processing results of the r pieces of sub-data, that is, obtain a processing result of the entire first data. Because first time and second time overlap, this helps shorten duration occupied by one data processing process of the first data, where the first time includes time occupied by tasks of sending the r pieces of sub-data and time occupied by tasks of sending the processing result of the r pieces of sub-data, and the second time includes time occupied by tasks of processing the r pieces of sub-data.

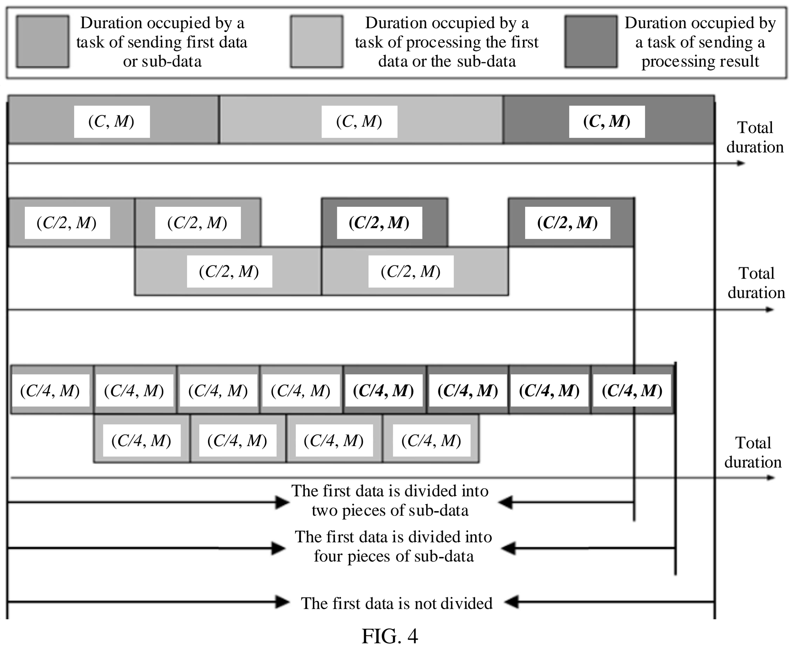

For more intuitive understanding of this solution, refer to FIG. 4. FIG. 4 is a diagram of three cases of total duration occupied by one data processing process of processing first data through a first neural network module according to an embodiment of this application. A case shown in a $1^{st}$ row in FIG. 4 is that the first data is not divided. As shown in FIG. 4, time occupied by a task of sending the entire first data, time occupied by a task of processing the entire first data, and time occupied by a task of sending a processing result of the entire first data do not overlap. A case shown in a $2^{nd}$ row and a $3^{rd}$ row in FIG. 4 is that the first data is divided into two pieces of sub-data. The $2^{nd}$ row in FIG. 4 shows time occupied by tasks of sending the two pieces of sub-data and time occupied by tasks of sending processing results of the two pieces of sub-data (namely, an example of the first time). The $3^{rd}$ row in FIG. 4 shows time occupied by tasks of processing the two pieces of sub-data (namely, an example of the second time). The first time and the second time shown in the $2^{nd}$ row and the $3^{rd}$ row in FIG. 4 overlap.

A case shown in a $4^{th}$ row and a $5^{th}$ row in FIG. 4 is that the first data is divided into four pieces of sub-data. The $4^{th}$ row in FIG. 4 shows time occupied by tasks of sending the four pieces of sub-data and time occupied by tasks of sending processing results of the four pieces of sub-data (namely, an example of the first time). The $3^{rd}$ row in FIG. 4 shows time occupied by tasks of processing the four pieces of sub-data (namely, an example of the second time). The first time and the second time shown in the $4^{th}$ row and the $5^{th}$ row in FIG. 4 overlap. In the three cases shown in FIG. 4, total duration occupied by the case in which "the first data is not divided" is the longest, and total duration occupied by the case in which "the first data is divided into two pieces of sub-data" is the shortest. It should be understood that the examples in FIG. 4 are merely for ease of understanding the concept that "dividing the first data helps shorten duration occupied by one data processing process of the first data", and is not intended to limit this solution.

To shorten time consumed in a processing process of the first data as much as possible, the data processing method provided in this application is used to determine a value of r, that is, determine a quantity of pieces of sub-data into which the first data is to be divided. Because in both the inference phase and the training phase of the first machine learning model/rule 301, the first neural network module in the first machine learning model/rule 301 performs data processing on the first data, the data processing method provided in this application may be used in both the inference phase and the training phase of the first machine learning model/rule 301. The following separately describes the inference phase and the training phase of the first machine learning model/rule 301.

1. Inference phase

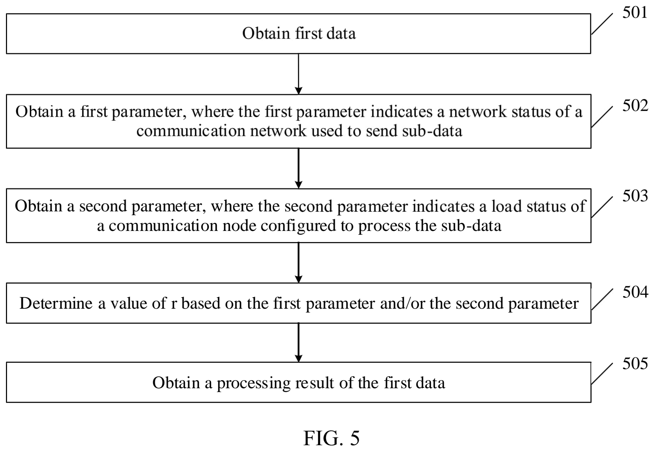

In embodiments of this application, the inference phase is a process in which the execution apparatus 330 generates a processing result of second data through the first machine learning model/rule 301 on which a training operation is performed. A meaning of the "second data" is explained in subsequent descriptions. Refer to FIG. 5. FIG. 5 is a schematic flowchart of a data processing method according to an embodiment of this application. The data processing method provided in embodiments of this application may include the following steps.

501: Obtain first data.

In this embodiment of this application, when the execution apparatus needs to process the second data through the first machine learning model, the execution device may input the second data into the first machine learning model. In a process of processing the second data through the first machine learning model, a communication node (referred to as a "first communication node" below for ease of description) in a plurality of communication nodes on which the first neural network module is deployed can obtain the first data processed by the first neural network module.

The second data may be of any data type. For example, a data type of the second data may be a text, an image, an audio, a video, or another data type. This is not limited herein.

The second data is data input into the first machine learning model, and the first data is data that needs to be processed through a first neural network module in the first machine learning model. The first machine learning model may include one or more first neural network modules. Optionally, the first machine learning model may further include at least one second neural network module, the second neural network module includes at least one neural network layer, and all neural network layers included in the second neural network module may be deployed on one communication node. Therefore, the second data and the first data may be the same or different.

For example, in one case, if the first neural network module configured to process the first data is a $1^{st}$ neural network module in the first machine learning model, the first data and the second data may be same data. In another case, if the first neural network module configured to process the first data is not the $1^{st}$ neural network module in the first machine learning model, the first data may be obtained by processing the second data through some neural network modules in the first machine learning model. In other words, the first data is an intermediate result generated in a process of processing the second data through the first machine learning model. Specifically, a relationship between the first data and the second data needs to be determined with reference to factors such as a location, in the first machine learning model, of the first neural network module configured to process the first data and an architecture of the first machine learning model. This is not limited herein.

For example, the first data may be specifically represented as a tensor.

The first machine learning model may be represented as various types of large models. Optionally, the first machine learning model may be represented as a mixture of expert (mixture of expert, MoE) model, and the first neural network module in the first machine learning model may be represented as a MoE module in the MoE model. Each MoE module (namely, an example of the first neural network module) may include a gate (gate) neural network layer and a plurality of expert (expert) neural network layers.

For example, when a MoE module is deployed on a plurality of communication nodes in one communication node cluster, one gate neural network layer and at least one expert neural network layer may be deployed on each communication node. Gate neural network layers deployed on different communication nodes may be the same, and quantities of expert neural network layers deployed on the different communication nodes may be the same or different. When the first data arrives at the first communication node, the gate neural network layer in the MoE module is configured to determine one or more expert neural network layers in the MoE module to process the first data, and the expert neural network layer in the MoE module is configured to actually process the first data.

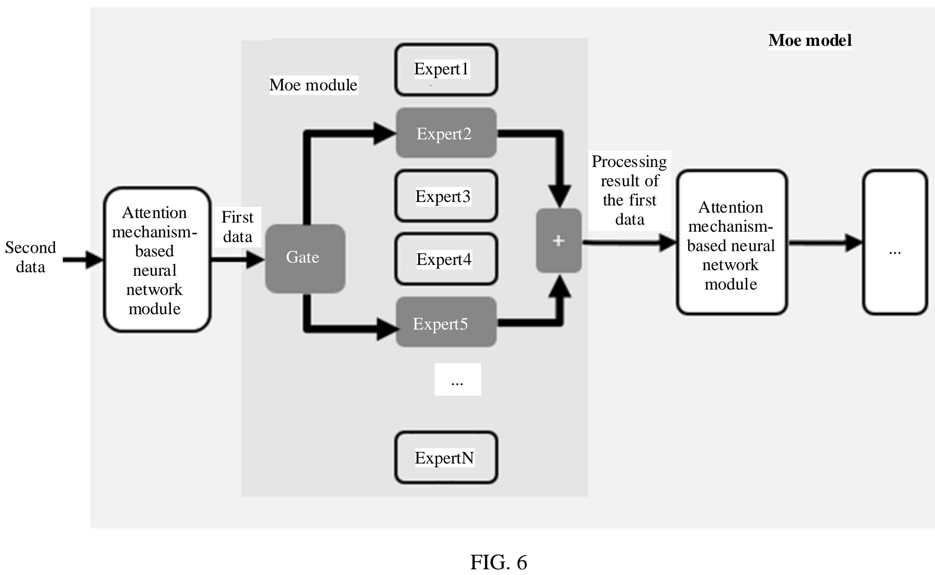

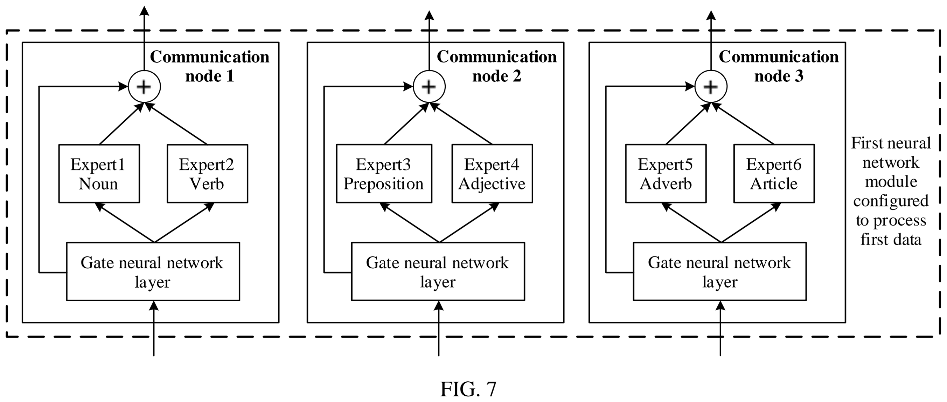

For more intuitive understanding of this solution, refer to FIG. 6 and FIG. 7. FIG. 6 is a diagram of a relationship between a first machine learning model and a first neural network module according to an embodiment of this application. FIG. 7 is a diagram of deploying a MoE module in a MoE model on a communication node cluster according to an embodiment of this application. First, refer to FIG. 6. In FIG. 6, a MoE model (namely, an example of the first machine learning model) includes not only a MoE module (namely, an example of the first neural network module), but also two attention (attention) mechanism-based neural network modules, another type of neural network module, and the like. This is not exhaustively described in embodiments of this application. The MoE module includes a gate neural network layer and N expert neural network layers. A plurality of expert neural network layers included in one MoE module may be deployed on a plurality of communication nodes. Specific deployment is described in FIG. 7. Details are not described herein.

As shown in FIG. 6, the second data is input into the first machine learning model, and the second data is processed through a 1st attention mechanism-based neural network module to obtain the first data; the first data is processed by an expert neural network layer 2 and an expert neural network layer 5 in the MoE module to obtain a processing result of the first data; the processing result of the first data continues to be processed through a 2nd attention mechanism-based neural network, to obtain an intermediate result generated through the 2nd attention mechanism-based neural network; further, another neural network module in the first machine learning model continues to process the intermediate result generated through the 2nd attention mechanism-based neural network; and the like, to finally obtain a processing result of the second data output by the first machine learning model. It should be understood that the example in FIG. 6 is merely for ease of understanding of this solution, and is not intended to limit this solution.

Refer to FIG. 7. An example in which text data is processed by the MoE module is used in FIG. 7. One gate neural network layer and two expert neural network layers are deployed on each communication node in the communication node cluster, and expert neural network layers deployed on different communication nodes are configured to process different types of words. For example, as shown in FIG. 7, two expert neural network layers (namely, expert1 and expert2 in FIG. 7) deployed on a communication node 1 are respectively configured to process a noun and a verb, two expert neural network layers (namely, expert3 and expert4 in FIG. 7) deployed on a communication node 2 are respectively configured to process a preposition and an adjective, and two expert neural network layers (namely, expert5 and expert6 in FIG. 7) deployed on a communication node 3 are respectively configured to process an adverb and an article. It should be understood that the example in FIG. 7 is merely for ease of understanding of this solution, and is not intended to limit this solution.

502: Obtain a first parameter, where the first parameter indicates a network status of a communication network used to send sub-data.

In embodiments of this application, step 502 is an optional step. After obtaining the first data, the first communication node may obtain a first parameter to determine a value of r, where the first parameter indicates a network status of a communication network used to send each of r pieces of sub-data, namely, a network status of a communication network used to execute a task of sending each piece of sub-data and a task of sending a processing result of the piece of sub-data. The communication network may be a network used when different communication nodes in the communication node cluster configured to deploy the first neural network module communicate with each other.

Optionally, the first parameter may include first start duration and first duration. The first start duration may exist between determining a data sending task by the first communication node in the communication node cluster configured to deploy the first neural network module and starting to execute the data sending task, and the first start duration may also be understood as communication start duration. The first duration indicates duration required for sending data of a first data amount.

The "data sending task" may be a task of sending any piece of sub-data in the r pieces of sub-data, or a task of sending a processing result of any piece of sub-data. For example, the "task of sending the r pieces of sub-data" and the "task of sending the processing results of the r pieces of sub-data" are performed in a same communication node set, and a communication environment in which the sub-data is sent and a communication environment in which the sub-data is sent may be considered to be the same. Therefore, communication start duration for sending the sub-data and communication start duration for sending the processing results of the sub-data may be considered as the same, and duration occupied by sending sub-data of the first data amount and duration occupied by sending the sub-data of the first data amount may be considered as the same.

The first data amount may also be understood as a unit data amount, and indicates a data size. For example, the first data amount may be 1 MB (megabyte), 512 KB (kilobytes), another size, or the like. The example herein is merely for ease of understanding a meaning of the "first data amount", and is not intended to limit this solution.

Optionally, an all to all (all to all) communication mode may be used between different communication nodes in the communication node cluster configured to deploy the first neural network module. In this case, the first duration may indicate duration required for sending the data of the first data amount in an all to all communication mode.

For example, that the all to all communication mode is used may include: When the first communication node in the communication node cluster sends data to a second communication node, the first communication node may invoke an interface with an all to all communication function to participate in queuing. When it is a turn to execute a data sending task of the first communication node, each communication node in the communication node cluster sends a data packet to another communication node in the communication node cluster. In other words, a plurality of data packets are sent between a plurality of communication nodes included in the communication node cluster. The plurality of data packets include a plurality of first data packets including valid data, and the first data packet is a data packet sent by the first communication node to the second communication node. Optionally, the plurality of data packets may further include a second data packet, the second data packet is a data packet other than the first data packet in the plurality of data packets, and the second data packet may include invalid data.

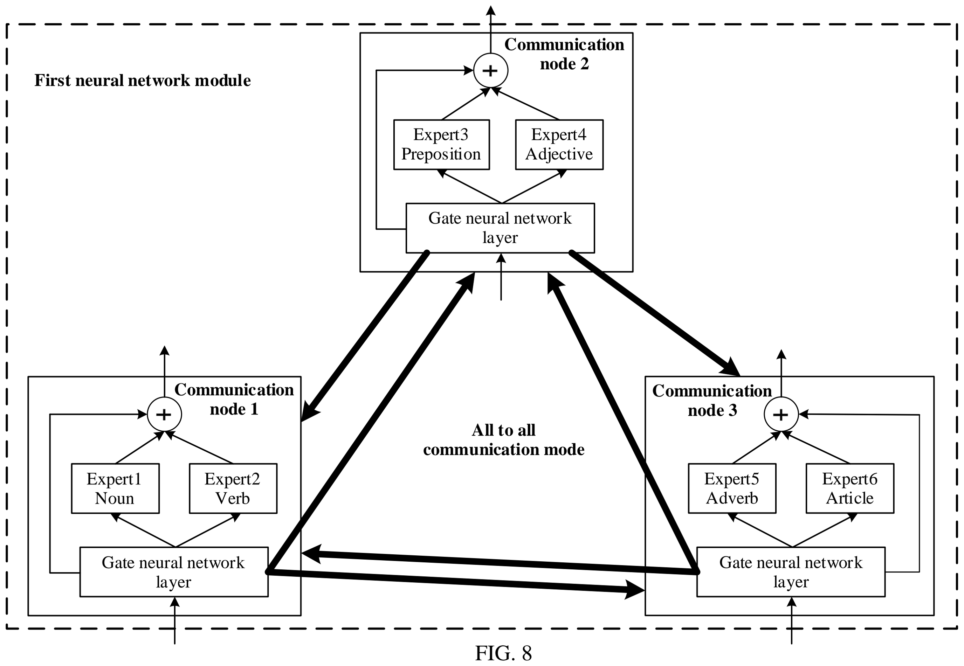

For more intuitive understanding of this solution, refer to FIG. 8. FIG. 8 is a diagram of an all to all communication mode used between different communication nodes in a communication node cluster according to an embodiment of this application. As shown in FIG. 8, six expert neural network layers included in the first neural network module are deployed on three communication nodes. For example, a communication node 1 is a first communication node, and a gate neural network layer in the communication node 1 determines that the first data needs to be processed by expert3. In other words, a communication node 2 is a second communication node, and that the communication node 1 sends each piece of sub-data to the communication node 2 in an all to all communication mode may include: The communication node 1 separately sends a data packet to the communication node 2 and a communication node 3, the communication node 2 separately sends a data packet to the communication node 1 and the communication node 3, and the communication node 3 separately sends a data packet to the communication node 1 and the communication node 2. A data packet sent by the communication node 1 to the communication node 2 includes sub-data, and a data packet sent by the communication node 1 to the communication node 3 includes invalid data. Data packets sent by the communication node 2 to the communication node 1 and the communication node 3 include invalid data. Data packets sent by the communication node 3 to the communication node 1 and the communication node 2 include invalid data. It should be understood that the example in FIG. 8 is merely for ease of understanding of this solution, and is not intended to limit this solution.

In embodiments of this application, an exact communication mode used when different communication nodes in the communication node cluster communicate with each other is provided, to improve a degree of combination between this solution and an actual application.

For example, the communication node cluster configured to deploy the first neural network module includes a plurality of communication nodes, and first parameters may be pre-deployed on the plurality of communication nodes. Optionally, the first parameters deployed in the plurality of communication nodes included in the communication node cluster are the same. For example, the first start duration and the first duration that are deployed on the plurality of communication nodes included in the communication node cluster are the same.

In embodiments of this application, because there is a high probability that communication loads of different communication nodes in the communication node cluster configured to deploy the first neural network module are similar, deploying a same first parameter in the different communication nodes satisfies an actual communication situation. The foregoing solution helps reduce difficulty in a process of "determining first parameters deployed in a plurality of communication nodes". In addition, because the first parameters in the different communication nodes are used in a process of determining the value of r, deploying the same first parameter in the different communication nodes also helps reduce complexity of the process of determining the value of r.

Embodiments of this application further provide a manner of obtaining the first parameter. The first parameter is obtained through statistics collection on a plurality of data sending tasks executed by any one or more communication nodes in the communication node cluster. Data sending tasks with different data amounts exist in the plurality of data sending tasks, that is, sizes of data that needs to be sent in at least two data sending tasks in the plurality of data sending tasks are different.

For example, the plurality of data sending tasks may include executing 15 data sending tasks, and the 15 data sending tasks include sending a 2 MB data packet five times, a 3 MB data packet five times, a 5 MB data packet two times, an 8 MB data packet three times, and a 10 MB data packet five times. After duration of the 15 data sending tasks is obtained through statistics collection, the first parameter is obtained. It should be noted that the example herein is merely for ease of understanding of this solution, and is not intended to limit this solution.

For example, in a statistics collection process of the first parameter, the plurality of data sending tasks may be executed by a same communication node (referred to as a "third communication node" below for ease of description) in the communication node cluster configured to deploy the first neural network module, and the third communication node determines the first parameter based on total duration of each data sending task in the plurality of data sending tasks.

Alternatively, the plurality of data sending tasks may be executed by different communication nodes in the communication node cluster. Total duration of executing each data sending task is summarized to a same third communication node, and the third communication node determines the first parameter based on the total duration of executing each data sending task in the plurality of data sending tasks.

Herein, an example in which the first parameter includes the first start duration and the first duration is used. In this application, total duration in which any communication node in the communication node cluster configured to deploy the first neural network module executes one data sending task may be modeled as the following formula:

$$t_{a2a}(y) = \alpha_a + \beta_a \times y; \ (1)$$

Herein, $t_{a2a}(y)$ indicates the total duration in which any communication node in the communication node cluster executes one data sending task, $\alpha_a$ indicates duration from determining the data sending task to starting to execute the data sending task (namely, the first start duration), $\beta_a$ indicates duration required for sending the data of the first data amount (namely, the first duration), and y indicates that a size of an amount of the data that needs to be sent is a product of y and the first data amount. Therefore, after the total duration consumed by each data sending task in the plurality of data sending tasks is obtained, values of $\alpha_a$ and $\beta_a$ can be obtained through fitting. In other words, values of the first start duration and the first duration are obtained. It should be understood that the example in Formula (1) is merely for ease of understanding of this solution, and is not intended to limit this solution.

Optionally, if an all to all communication mode is used between different communication nodes in the communication node cluster configured to deploy the first neural network module, the first parameter is obtained through statistics collection on a plurality of data sending tasks executed by any one or more communication nodes in the communication node cluster in an all to all communication mode. Data sending tasks with different data amounts exist in the plurality of data sending tasks.

For example, the first start duration and the first duration are obtained through statistics collection on a plurality of data sending tasks executed by any one or more communication nodes in the communication node cluster in an all to all communication mode.

In embodiments of this application, different communication nodes communicate with each other in an all to all communication mode, so that a probability that first parameters corresponding to the different communication nodes are consistent is further improved. In this case, the first parameter obtained through statistics collection on the plurality of data sending tasks that are executed in an all to all communication mode is more appropriate to an actual communication status in the communication node cluster, so that a process of determining r is consistent with the actual communication status.

Optionally, the first parameters deployed in the plurality of communication nodes are adjustable. For example, the first start duration and the first duration that are deployed in the plurality of communication nodes are adjustable. To be specific, in a working process of the plurality of communication nodes, at least one communication node in the communication node cluster configured to deploy the first neural network module may re-execute a plurality of data sending tasks, and collect statistics about the plurality of re-executed data sending tasks to obtain an updated parameter. The updated first parameter is redeployed in the plurality of communication nodes included in the communication node cluster.

For example, when the first neural network module is deployed on the communication node cluster for the first time, the first parameter may be obtained through statistics collection. After running duration of the first neural network module reaches the first duration, an updated first parameter is obtained through other statistics collection. For another example, an updated first parameter may be re-obtained at an interval of preset duration. For another example, when the at least one communication node in the communication node cluster configured to deploy the first neural network module changes, an updated first parameter is re-obtained once, or the like. Alternatively, an updated first parameter may be re-obtained in another case. This may be specifically flexibly determined with reference to an actual application scenario. This is not limited in embodiments of this application.

503: Obtain a second parameter, where the second parameter indicates a load status of a communication node configured to process the sub-data.

In embodiments of this application, step 503 is an optional step. After obtaining the first data, the first communication node may obtain the second parameter to determine the value of r, where the second parameter indicates a data processing load status of the communication node configured to process the sub-data, to reflect duration consumed when the communication node that processes the sub-data executes the task of processing each piece of sub-data.

Optionally, the second parameter may include second start duration and second duration, the second start duration indicates duration from determining a data processing task to executing the data processing task, the data processing task indicates processing data through a neural network layer in the first machine learning model, and the second duration indicates duration required for processing data of a second data amount through the neural network layer in the first machine learning model.

In embodiments of this application, there may also be second start duration from determining, by the first communication node in the communication node cluster configured to deploy the first neural network module, a data processing task to be executed through the neural network layer in the first neural network module to starting to execute the data processing task. The second start duration may also be understood as processing start duration. In this case, after obtaining the first data, the first communication node may further obtain the second start duration and the second duration to determine the value of r.

The "data processing task" indicates a task of processing any piece of sub-data in the r pieces of sub-data of the data through the neural network layer in the first neural network module included in the first machine learning model.

The second duration indicates duration required for processing the data of the second data amount through the neural network layer in the first neural network module included in the first machine learning model. A concept of the "second data amount" is similar to that of the "first data amount". The second data amount may also be understood as a unit data amount, and indicates a size of data. For understanding, refer to the foregoing descriptions. Details are not described herein again. A value of the second data amount may be the same as or different from a value of the first data amount. This is not limited in embodiments of this application.

Optionally, if the first machine learning model is represented as a MoE model, and the first neural network module is a MoE module, the "data processing task" indicates a task of processing any piece of sub-data in the r pieces of sub-data through an expert neural network layer in the MoE module. The second duration indicates duration required for processing the data of the second data amount through the expert neural network layer in the MoE module included in the MoE model. In embodiments of this application, the first machine learning model is determined as the MoE model. In other words, a specific application scenario of the method provided in this application is provided. This improves a degree of combination between this solution and a specific application scenario. In addition, a degree of matching between the MoE model and the method provided in this application is high. This helps greatly shorten time consumed by the MoE model in a data processing process.

For example, the communication node cluster configured to deploy the first neural network module includes a plurality of communication nodes, and second parameters may be pre-deployed on the plurality of communication nodes. Optionally, the second parameters deployed in the plurality of communication nodes included in the communication node cluster are the same. For example, the second start duration and the second duration that are deployed on the plurality of communication nodes included in the communication node cluster are the same.

In embodiments of this application, because quantities of neural network layers deployed on different communication nodes in the communication node cluster configured to deploy the first neural network module are usually the same, and there is a high probability that data processing load amounts on the different communication nodes are similar, deploying a same second parameter in the different communication nodes satisfies an actual communication situation. The foregoing solution helps reduce difficulty in a process of "determining second parameters deployed in a plurality of communication nodes". Because the second parameters in the different communication nodes are used in a process of determining the value of r, the foregoing solution also helps reduce complexity of the process of determining the value of r.

Embodiments of this application further provides a manner of obtaining the second parameter. The second parameter is obtained through statistics collection on a plurality of data processing tasks executed through the neural network layer in the first neural network module included in the first machine learning model. Data of different data amounts is processed in the plurality of data processing tasks, that is, sizes of data that needs to be processed in at least two data processing tasks in the plurality of data processing tasks are different.

For example, the plurality of data processing tasks may include executing 20 data processing tasks, and the 20 data processing tasks include processing 1.5 MB data twice, processing 2 MB data three times, processing 3 MB data five times, processing 4 MB data five times, processing 7 MB data three times, and processing 9 MB data twice. After duration of the 20 data processing tasks is obtained through statistics collection, the second start duration and the second duration are obtained. It should be understood that the example herein is merely for ease of understanding of this solution, and is not intended to limit this solution.

Optionally, the sizes of the data that needs to be processed in the at least two data processing tasks in the plurality of data processing tasks are the same. A plurality of pieces of duration obtained when data of a same data size is processed may be averaged to obtain an average value, and statistics collection may be performed based on a plurality of average values corresponding to data of different data sizes, to obtain the second parameter.

For example, the plurality of data processing tasks may include executing 20 data processing tasks, and the 20 data processing tasks include processing 1.5 MB data twice, processing 2 MB data three times, processing 3 MB data five times, processing 4 MB data five times, processing 7 MB data three times, and processing 9 MB data twice. When duration of the 20 data processing tasks is obtained through statistics collection, duration 1 may be obtained by averaging two pieces of duration of processing the 1.5 MB data twice, duration 2 may be obtained by averaging three pieces of duration of processing the 2 MB data three times, duration 3 may be obtained by averaging five pieces of duration of processing the 3 MB data five times, duration 4 is obtained by averaging five pieces of duration of processing the 4 MB data five times, duration 5 is obtained by averaging three pieces of duration of processing the 7 MB data three times, and duration 6 is obtained by averaging two pieces of duration of processing the 9 MB data twice. Further, the second parameter is generated based on the duration 1 corresponding to processing the 1.5 MB data, the duration 2 corresponding to processing the 2 MB data, the duration 3 corresponding to processing the 3 MB data, the duration 4 corresponding to processing the 4 MB data, the duration 5 corresponding to processing the 7 MB data, and the duration 6 corresponding to processing the 9 MB data. It should be noted that the example herein is merely for ease of understanding of the manner of obtaining the "second parameter", and is not intended to limit this solution.

For example, in a statistics collection process of the second parameter, the plurality of data processing tasks may be executed by a same communication node (referred to as a "third communication node" below for ease of description) in the communication node cluster configured to deploy the first neural network module, and the third communication node determines the second parameter based on total duration of each data processing task in the plurality of data processing tasks. In embodiments of this application, because there is a high probability that the data processing load amounts on the different communication nodes in the communication node cluster configured to deploy the first neural network module are similar, the second parameter obtained through statistics collection is performed on a plurality of data processing tasks executed on a same communication node satisfies an actual situation. In addition, the plurality of data processing tasks are executed on the same communication node, so that data communication between different communication nodes is avoided, and duration consumed in a process of "determining the second parameter" is shortened.

Alternatively, the plurality of data processing tasks may be executed by different communication nodes in the communication node cluster. Total duration of executing each data processing task is summarized to a same third communication node, and the third communication node determines the second parameter based on the total duration of executing each data processing task in the plurality of data processing tasks.

Herein, an example in which the second parameter includes the second start duration and the second duration is used. In this application, total duration in which any communication node in the communication node cluster configured to deploy the first neural network module executes one data processing task may be modeled as the following formula:

$$t_e(x) = \alpha_e + \beta_e \times x; \quad (2)$$

Herein, $t_e(x)$ indicates the total duration in which any communication node in the communication node cluster executes one data processing task, $\alpha_e$ indicates duration from determining the data processing task to starting to execute the data processing task (namely, the second start duration), $\beta_e$ indicates duration required for processing the data of the second data amount (namely, the second duration), and $x$ indicates that a size of an amount of the data that needs to be processed is a product of $x$ and the second data amount. Therefore, after the total duration consumed by each data processing task in the plurality of data processing tasks is obtained, values of $\alpha_e$ and $\beta_e$ can be obtained through fitting. In other words, values of the second start duration and the second duration are obtained. It should be understood that the example in Formula (2) is merely for ease of understanding of this solution, and is not intended to limit this solution.

In embodiments of this application, a solution for determining the second parameter is provided, to reduce implementation difficulty of the method provided in this application. In addition, the second parameter is obtained through statistics collection on the plurality of data processing tasks, and the data of the different data amounts is processed in the plurality of data processing tasks. In this way, the determined second parameter can be compatible with data processing tasks with various data amounts, and an optimal value of r can be obtained in the data processing tasks with the various data amounts.

Optionally, the second parameters deployed in the plurality of communication nodes are adjustable. For example, the second start duration and the second duration that are deployed in the plurality of communication nodes are adjustable. To be specific, in a working process of the plurality of communication nodes, at least one communication node in a communication node cluster configured to deploy the second neural network module may re-execute a plurality of data processing tasks, and collect statistics about the plurality of re-executed data processing tasks to obtain updated second start duration and updated second duration. The updated second start duration and the updated second duration are redeployed in a plurality of communication nodes included in the communication node cluster.

It should be noted that the "second parameter" may be updated together with the "first parameter". An update scenario of the "first parameter" is described in step 503. For an update scenario of the "second parameter", refer to the descriptions for understanding. Details are not described herein again.

504: Determine the value of r based on the first parameter and/or the second parameter.

In embodiments of this application, the first communication node may determine the value of r based on the first parameter and/or the second parameter and a data amount of the first data, so that the first data is divided into r pieces of sub-data. In other words, a process of processing the entire first data through the first neural network module may include tasks of sending the r pieces of sub-data, tasks of processing the r pieces of sub-data, and tasks of sending processing results of the r pieces of sub-data.

For example, the process of processing the entire first data may be represented as follows:

$$\mathbb{D} = [D_1, D_2, ..., D_r]$$ , $$\mathbb{E} = [E_1, E_2, ..., E_r]$$ , and $$\mathbb{C} = [C_1, C_2, ..., C_r]$$ . Herein, $D_1, D_2, ..., D_r$ indicates the tasks of sending the r pieces of sub-data, $E_1, E_2, ..., E_r$ indicates the tasks of processing the r pieces of sub-data, and $C_1, C_2, ..., C_r$ indicates the tasks of sending the processing results of the r pieces of sub-data. It should be noted that, because "the tasks of sending the r pieces of sub-data" and "the tasks of sending the processing results of the r pieces of sub-data" are executed in a same communication node set, "time occupied by the tasks of sending the r pieces of sub-data" and "time occupied by the tasks of sending the processing results of the r pieces of sub-data" do not overlap. Optionally, in this application, that the tasks of sending the processing results of the r pieces of sub-data needs to be started after the tasks of sending the r pieces of sub-data is completed is limited.

For example, the first communication node may solve the target function based on the first parameter and/or the second parameter, to determine the value of r. The target function indicates total duration consumed in obtaining the processing results of the r pieces of sub-data, that is, the target function may be obtained through modeling performed on total duration consumed in executing the tasks of sending the r pieces of sub-data, the tasks of processing the r pieces of sub-data, and the tasks of sending the processing results of the r pieces of sub-data. A solving objective of the target function may be that a value of the target function is the smallest. A constraint condition of the target function is related to the time occupied by the tasks of sending the sub-data and the time occupied by the tasks of processing the sub-data.

In embodiments of this application, the target function indicates the total duration consumed in obtaining the processing results of the r pieces of sub-data, and the constraint condition of the target function is related to the time occupied by the tasks of sending the sub-data and the time occupied by the tasks of processing the sub-data. In other words, the total duration consumed in obtaining the processing results of the r pieces of sub-data can be accurately reflected based on the target function. A process of determining r is converted into a process of solving the target function. This improves fineness of the process of determining r, and helps obtain an optimal value of r, to further shorten total duration consumed in an entire process of processing the first data.

Specifically, when the first parameter includes the first start duration and the first duration, and the second parameter includes the second start duration and the second duration, optionally, step 504 may include: The first communication node models, based on the first start duration, the first duration, the second start duration, the second duration, and the data amount of the first data, total duration consumed in executing the tasks of sending the r pieces of sub-data, the tasks of processing the r pieces of sub-data, and the tasks of sending the processing results of the r pieces of sub-data, to obtain an optimal solution of r through solving with shortest total duration consumed by the tasks of sending the r pieces of sub-data, the tasks of processing the r pieces of sub-data, and the tasks of sending the processing results of the r pieces of sub-data as a solving target.

For further understanding of this solution, the following discloses an example of a formula used when modeling is performed on the total duration consumed by the tasks of sending the r pieces of sub-data, the tasks of processing the r pieces of sub-data, and the tasks of sending the processing results of the r pieces of sub-data.

Execution time required for a task $D_i$ of sending any piece of sub-data in $D_1, D_2, ..., D_r$ is $t_d^{(i)}$ , execution time required for a task $E_i$ of processing any piece of sub-data in $E_1, E_2, ..., E_r$ is $t_e^{(i)}$ , and execution time required for a task $C_i$ of sending a processing result of any piece of sub-data in $C_1, C_2, ..., C_r$ is $t_c^{(i)}$ , where $\tau_d^{(i)}$ , $\tau_e^{(i)}$ , and $\tau_c^{(i)}$ respectively indicate execution start time of $D_i$, execution start time of $E_i$, and execution start time of $C_i$, and $\tau_d^{(i)}$ , $\tau_e^{(i)}$ , and $\tau_c^{(i)}$ may be expressed as the following formulas:

$$\tau_d^{(i)} = \begin{cases} 0, i = 1 \\ \tau_d^{(i-1)} + t_d^{(i-1)}, 2 \leq i \leq r \end{cases}; (3)$$

$$\tau_e^{(i)} = \begin{cases} \tau_d^{(1)} + t_d^{(1)}, i = 1 \\ max\{\tau_e^{(i-1)} + t_e^{(i-1)}, \tau_d^{(i)} + t_d^{(i)}\}, 2 \leq i \leq r \end{cases} ; (4)$$

$$\tau_c^{(i)} = \begin{cases} max\{\tau_e^{(1)} + t_e^{(1)}, \tau_d^{(r)} + t_d^{(r)}\}, i = 1 \\ max\{\tau_e^{(i)} + t_e^{(i)}, \tau_c^{(i-1)} + t_c^{(i-1)}\}, 2 \leq i \leq r \end{cases} ; (5)$$

$$t_{moe} = \begin{cases} t_d + t_e + t_c, r = 1 \\ \tau_c^{(r)} + t_c^{(r)}, r \geq 2 \end{cases} ; (6)$$

Refer to the foregoing Formula (3) to Formula (6), it can be learned that start time of a task $D_1$ of sending a 1st piece of sub-data (namely, a 1st data sending task) is considered as 0. In this case, when $2 \leq i \leq$ r, start execution time of a task $D_i$ of sending any piece of sub-data is start execution time $\tau_d^{(i-1)}$ of a task of sending a previous piece of sub-data plus execution time $t_d^{(i-1)}$ of the task of sending the previous piece of sub-data. Only after an $i^{th}$ piece of sub-data is sent to the second communication node and processing of an (i-1)$^{th}$ piece of sub-data by the second communication node is completed, the second communication node can process the $i^{th}$ piece of sub-data through a neural network layer deployed on the second communication node. Therefore, when $i$ = 1, start time of a task $E_1$ of processing a 1st piece of sub-data (namely, the 1st data processing task) is $\tau_d^{(1)} + t_d^{(1)}$, namely, start time of a task $D_1$ of sending the 1st piece of sub-data plus execution time of the task of sending the 1st piece of sub-data. When $2 \leq i \leq r$, start execution time of a task $E_i$ of processing any piece of sub-data is later time in two pieces of time. The foregoing two pieces of time include end time (namely, $\tau_e^{(i-1)} + t_e^{(i-1)}$ in the formula) of a task of processing the (i-1)$^{th}$ piece of sub-data and end time (namely, $\tau_d^{(i)} + t_d^{(i)}$ in the formula) of a task of sending the $i^{th}$ piece of sub-data.

A task of sending a processing result of the 1st piece of sub-data starts to be executed only after a task of sending an $r^{th}$ piece of sub-data is completed, and a task of sending a processing result of the $i^{th}$ piece of sub-data starts to be executed only after the second communication node completes a task of processing the $i^{th}$ piece of sub-data. Therefore, when $i$ = 1, start execution time of the task $C_1$ of sending the processing result of the 1st piece of sub-data is later time in end time (namely, $\tau_d^{(r)} + t_d^{(r)}$ in the formula) of the task of sending the $r^{th}$ piece of sub-data and end time (namely, $\tau_e^{(1)} + t_e^{(1)}$ in the formula) of the task of processing the 1st piece of sub-data. When $2 \leq i \leq r$, start execution time of the task $C_i$ of sending the processing result of any piece of sub-data is later time in end time (namely, $\tau_e^{(i)} + t_e^{(i)}$ in the formula) of the task of processing the $i^{th}$ piece of sub-data and end time ( $\tau_c^{(i-1)} + t_c^{(i-1)}$ ) of a task of sending a processing result of the (i-1)$^{th}$ piece of sub-data.

Herein, $t_{moe}$ indicates the total duration consumed in executing the tasks of sending the r pieces of sub-data, the tasks of processing the r pieces of sub-data, and the tasks of sending the processing results of the r pieces of sub-data. When the value of r is 1, it indicates that the first data is not divided. In this case, $t_{moe}$ is equal to a sum of execution time (namely, $t_d$ in the formula) of the task of sending the entire first data, execution time (namely, $t_e$ in the formula) of the task of processing the entire first data, and execution time (namely, $t_c$ in the formula) of the task of sending the processing result of the entire first data. When $r \geq 2$, it indicates that the first data is divided. If the start time of the task $D_1$ of sending the 1st piece of sub-data (namely, the 1st data sending task) is considered as 0, $t_{moe}$ is equal to end time (namely, $\tau_c^{(r)} + t_c^{(r)}$ in the formula) of a task of sending a processing result of the $r^{th}$ piece of sub-data.

The foregoing Formula (1) is used to model the execution time $t_d^{(i)}$ of the task of sending the sub-data and the execution time $t_c^{(i)}$ of the task of sending the processing result of the sub-data. In this case, $t_d^{(i)}$ and $t_c^{(i)}$ may be further expressed according to the foregoing Formula (1). The foregoing Formula (2) is used to model the execution time $t_e^{(i)}$ of the task of processing the sub-data. In this case, $t_e^{(i)}$ may be further expressed according to the foregoing Formula (2).

Because the plurality of neural network layers included in the first neural network module are known, a relationship between a data amount of the processing result of each piece of sub-data and a data amount of each piece of sub-data may be learned in advance. For example, the data amount of the processing result of each piece of sub-data is a preset multiple of the data amount of each piece of sub-data. In other words, a data amount of the processing result of the first data can be obtained based on the data amount of the first data, and then the data amount of the processing result of each piece of sub-data of the r pieces of sub-data can be obtained. For example, a value of the preset multiple may be 0.7, 0.8, 1, 1.2, 3, or another value. This should be specifically determined with reference to an actual application scenario. This is not limited herein.

Optionally, if the first neural network module is the MoE module, the value of the preset multiple may be 1. In other words, it is considered that the data amount of each piece of sub-data is the same as the data amount of the processing result of each piece of sub-data.

In a process of sending each piece of sub-data of the r pieces of sub-data, each piece of sub-data needs to be encapsulated into a data packet. In other words, the data packet obtained by encapsulating each piece of sub-data is greater than each piece of sub-data by a preset data amount. The preset data amount indicates a size of a header of the data packet. In other words, a data amount of a data sending task corresponding to each piece of sub-data can be obtained based on the data amount of each piece of sub-data. Correspondingly, in a process of sending the processing result of each piece of sub-data, the processing result of each piece of sub-data needs to be encapsulated into a data packet. In other words, the data packet obtained by encapsulating the processing result of each piece of sub-data is greater than the processing result of each piece of sub-data by a preset data amount. The preset data amount indicates a size of a header of the data packet. In other words, a data amount of a data sending task corresponding to the processing result of each piece of sub-data can be obtained based on the data amount of the processing result of each piece of sub-data.

Therefore, after the first start duration $\alpha_a$, the first duration $\beta_a$, the second start duration $\alpha_e$, the second duration $\beta_e$, and the data amount of the first data are determined, the optimal solution of r can be determined with a smallest $t_{moe}$ as a solving target. It should be noted that the examples in Formula (3) to Formula (6) are merely for ease of understanding this solution and proving implementability of this solution, and are not intended to limit this solution.

In embodiments of this application, the first communication node may perform step 504 in a plurality of manners. In an implementation: The first communication node may obtain one target function for modeling the total duration of the tasks of sending the r pieces of sub-data, the tasks of processing the r pieces of sub-data, and the tasks of sending the processing results of the r pieces of sub-data, and obtain r through solving, where shortest total duration of the tasks of sending the r pieces of sub-data, the tasks of processing the r pieces of sub-data, and the tasks of sending the processing results of the r pieces of sub-data is used as an optimization objective of the foregoing target function. It should be noted that, for a dependency relationship between a plurality of items included in the foregoing target function, refer to the foregoing Formula (1) to Formula (6) for understanding.

In another implementation, when the data amount of the sub-data and the data amount of the processing result of the sub-data are considered to be the same, a process of solving r may be divided into three cases. In one case, time occupied by a task of sending one piece of sub-data (namely, time occupied by a task of sending a processing result of the piece of sub-data) is greater than or equal to time occupied by a task of processing the piece of sub-data.

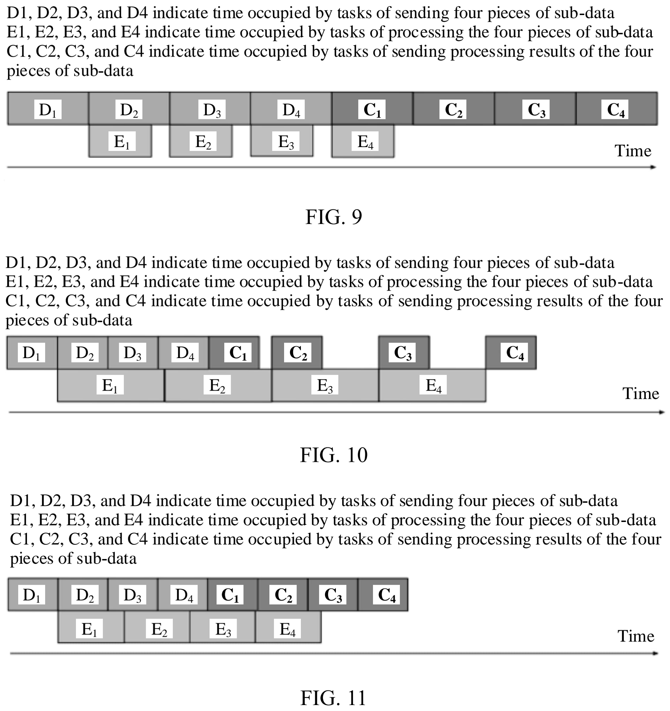

For more intuitive understanding of this solution, refer to FIG. 9. FIG. 9 is a diagram of a relationship between time occupied by tasks of sending r pieces of sub-data, time occupied by tasks of sending processing results of the r pieces of sub-data, and time occupied by tasks of processing the r pieces of sub-data according to an embodiment of this application. In FIG. 9, an example in which the value of r is 4 is used. D1, D2, D3, and D4 indicate time occupied by tasks of sending four pieces of sub-data, E1, E2, E3, and E4 indicate time occupied by tasks of processing the four pieces of sub-data, and C1, C2, C3, and C4 indicate time occupied by tasks of sending processing results of the four pieces of sub-data. Time occupied by a task of sending each piece of sub-data is greater than time occupied by a task of processing each piece of sub-data. As shown in FIG. 9, it is assumed that i is any value from 1 to 4, time occupied by a task of sending an (i+1)th piece of sub-data can totally cover time occupied by s task of processing an ith piece of sub-data, and time occupied by a task of sending a processing result of a 1st piece of sub-data can totally cover time occupied by a task of processing a 4th piece of sub-data. It should be understood that the example in FIG. 9 is merely for ease of understanding of this solution, and is not intended to limit this solution.

In another case, time occupied by a task of sending one piece of sub-data (namely, time occupied by a task of sending a processing result of the piece of sub-data) is less than time occupied by a task of processing the piece of sub-data, and second time is not a subset of first time. In other words, the second time cannot totally cover the first time. The first time includes the time occupied by the tasks of sending the r pieces of sub-data and the time occupied by the tasks of sending the processing results of the r pieces of sub-data, and the second time includes the time occupied by the tasks of processing the r pieces of sub-data.

For more intuitive understanding of this solution, refer to FIG. 10. FIG. 10 is another diagram of a relationship between time occupied by tasks of sending r pieces of sub-data, time occupied by tasks of sending processing results of the r pieces of sub-data, and time occupied by tasks of processing the r pieces of sub-data according to an embodiment of this application. In FIG. 10, an example in which the value of r is 4 is used. Time occupied by a task of sending each piece of sub-data is less than time occupied by a task of processing each piece of sub-data, the second time overlaps the first time, and the second time cannot totally cover the first time. It should be understood that the example in FIG. 10 is merely for ease of understanding of this solution, and is not intended to limit this solution.

In another case, time occupied by a task of sending one piece of sub-data is less than time occupied by a task of processing the piece of sub-data, and the second time is a subset of the first time. In other words, the second time can totally cover the first time.

For more intuitive understanding of this solution, refer to FIG. 11. FIG. 11 is another diagram of a relationship between time occupied by tasks of sending r pieces of sub-data, time occupied by tasks of sending processing results of the r pieces of sub-data, and time occupied by tasks of processing the r pieces of sub-data according to an embodiment of this application. In FIG. 11, an example in which the value of r is 4 is used. Time occupied by a task of sending each piece of sub-data is less than time occupied by a task of processing each piece of sub-data, and the second time can totally cover the first time. It should be understood that the example in FIG. 11 is merely for ease of understanding of this solution, and is not intended to limit this solution.

Correspondingly, first target functions, second target functions, and third target functions that are in a one-to-one correspondence with the foregoing three cases may be separately deployed on the first communication node. The first target function, the second target function, and the third target function each indicate total duration consumed in obtaining the processing results of the r pieces of sub-data. In other words, the first target function, the second target function, and the third target function each indicate total duration of the tasks of sending the r pieces of sub-data, the tasks of processing the r pieces of sub-data, and the tasks of sending the processing results of the r pieces of sub-data.

A difference lies in that a constraint condition of the first target function includes that time occupied by a task of sending one piece of sub-data is greater than or equal to time occupied by a task of processing the piece of sub-data; a constraint condition of the second target function includes that time occupied by a task of sending one piece of sub-data is less than time occupied by a task of processing the piece of sub-data, and the second time is not a subset of the first time; and a constraint condition of the third target function includes that time occupied by a task of sending one piece of sub-data is less than time occupied by a task of processing the piece of sub-data, and the second time is a subset of the first time.

To further understand this solution, the following separately discloses an example of formulas of the first target function and the constraint condition of the first target function, the second target function and the constraint condition of the second target function, and the third target function and the constraint condition of the third target function. It should be noted that the following disclosed formulas are derived formulas.

The first target function and the constraint condition of the first target function are as follows:

$$\text{Minimize: } f_1(r) = 2\alpha_a r + 2n_d\beta_a; \ (7)$$

$$\text{s.t.} \alpha_a + \beta_a \frac{n_d}{r} \geq \alpha_e + \beta_e \frac{n_e}{r}; \ (8)$$

Herein, $f_1(r)$ indicates the first target function, and in a case corresponding to the first target function, the total duration of the tasks of sending the r pieces of sub-data, the tasks of processing the r pieces of sub-data, and the tasks of sending the processing results of the r pieces of sub-data is duration occupied by the tasks of sending the r pieces of sub-data and the tasks of sending the processing results of the r pieces of sub-data (which may be understood with reference to FIG. 9), and is equivalent to twice duration occupied by the tasks of sending the r pieces of sub-data, and an optimization objective of $f_1(r)$ is a minimum value of $f_1(r)$. Herein, $\alpha_a + \beta_a \frac{n_d}{r} \geq \alpha_e + \beta_e \frac{n_e}{r}$ indicates that time occupied by a task of sending one piece of sub-data is greater than or equal to time occupied by a task of processing the piece of sub-data, where $n_d$ indicates a ratio of a total data amount of r data packets corresponding to the r pieces of sub-data to the first data amount (referred to as a "first ratio" below for ease of description), or may be understood as a ratio of a total data amount of r data packets corresponding to the processing results of the r pieces of sub-data to the first data amount, $n_e$ indicates a ratio of the data amount of the first data to the second data amount (referred to as a "second ratio" below for ease of description), r indicates that the first data is divided into the r pieces of sub-data, $\alpha_a$ indicates the first start duration, $\beta_a$ indicates the first duration, $\alpha_e$ indicates the second start duration, and $\beta_e$ indicates the second duration. It should be understood that examples in Formula (7) and Formula (8) are merely for ease of understanding this solution and proving implementability of this solution, and are not intended to limit this solution.

The second target function and the constraint condition of the second target function are as follows:

$$\text{Minimize: } f_2(r) = 2\alpha_a + \frac{2\beta_a n_d}{r} + \alpha_e r + \beta_e n_e; (9)$$

$$\text{s.t. } \alpha_a + \beta_a \frac{n_d}{r} < \alpha_e + \beta_e \frac{n_e}{r}; (10)$$

$$2(r-1)\alpha_a + \frac{2(r-1)\beta_a n_d}{r} < r\alpha_e + \beta_e n_e; (11)$$

$$r \geq 2; (12)$$

Herein, $f_2(r)$ indicates the second target function, and in a case corresponding to the second target function, the total duration of the tasks of sending the r pieces of sub-data, the tasks of processing the r pieces of sub-data, and the tasks of sending the processing results of the r pieces of sub-data is duration occupied by a task of sending one piece of sub-data and a task of sending a processing result of the piece of sub-data plus duration occupied by the tasks of processing the r pieces of sub-data (which may be understood with reference to FIG. 10), and is equivalent to duration (namely, $2\alpha_a + \frac{2\beta_a n_d}{r}$ ) occupied by tasks of sending two pieces of sub-data plus duration (namely, $\alpha_e r + \beta_e n_e$) occupied by the tasks of processing the r pieces of sub-data, and an optimization objective of $f_2(r)$ is a minimum value of $f_2(r)$. Herein, $\alpha_a + \beta_a \frac{n_d}{r} < \alpha_e + \beta_e \frac{n_e}{r}$ indicates that time occupied by a task of sending one piece of sub-data is less than time occupied by a task of processing the piece of sub-data, and $2(r-1)\alpha_a + \frac{2(r-1)\beta_a n_d}{r} < r\alpha_e + \beta_e n_e$ indicates that the second time is not a subset of the first time. It should be noted that, for a meaning of each letter in Formula (9) to Formula (12), refer to the foregoing descriptions of Formula (1) to Formula (8) for understanding. Details are not described herein again.

The third target function and the constraint condition of the third target function are as follows:

$$\text{Minimize: } f_3(r) = 2\alpha_a r + 2n_d \beta_a; (13)$$

$$\text{s.t. } \alpha_a + \beta_a \frac{n_d}{r} < \alpha_e + \beta_e \frac{n_e}{r}; (14)$$

$$2(r-1)\alpha_a + \frac{2(r-1)\beta_a n_d}{r} \geq r\alpha_e + \beta_e n_e; (15)$$

$$r \geq 2; (16)$$

Here, $f_3(r)$ indicates the third target function. A meaning of the third target function (which may be understood with reference to FIG. 11) is similar to a meaning of the first target function, and may be understood with reference to the foregoing descriptions. A meaning of Formula (14) is the same as a meaning of Formula (10), and may be understood with reference to the foregoing descriptions. Herein, $2(r-1)\alpha_a + \frac{2(r-1)\beta_a n_d}{r} \geq r\alpha_e + \beta_e n_e$ indicates that the second time is a subset of the first time. It should be noted that, for a meaning of each letter in Formula (13) to Formula (16), refer to the foregoing descriptions of Formula (1) to Formula (12) for understanding. Details are not described herein again.

For example, step 504 may include: After determining the first start duration, the first duration, the second duration, the second duration, and the data amount of the first data, the first communication node may determine, based on the data amount of the first data, the first ratio of the total data amount of the r data packets corresponding to the r pieces of sub-data to the first data amount, and the second ratio of the data amount of the first data to the second data amount, to solve the first target function, the second target function, and/or the third target function based on the first start duration, the first duration, the second duration, the second duration, the first ratio, and the second ratio, so as to determine the value of r.

Specifically, in an implementation, the first communication node may separately solve the first target function, the second target function, and the third target function by substituting the first start duration, the first duration, the second duration, the second duration, the first ratio, and the second ratio into the first target function and the constraint condition of the first target function, the second target function and the constraint condition of the second target function, and the third target function and the constraint condition of the third target function, so that an r value corresponding to the first target function, an r value corresponding to the second target function, and an r value corresponding to the third target function can be separately obtained. The first communication node may obtain a value of r corresponding to a target function whose value is the smallest in the first target function, the second target function, and the third target function, and determine the obtained value of r as the value of r.

In another implementation, the first communication node may select, from the first target function, the second target function, and the third target function based on the first start duration, the first duration, the second duration, and the second duration, a target function that matches "the first start duration, the first duration, the second duration, and the second duration", and solve the selected target function by substituting the first start duration, the first duration, the second duration, the second duration, the first ratio, and the second ratio into the selected target function and a constraint condition of the target function, to obtain a value of r.

In embodiments of this application, the entire first data is divided into the r pieces of sub-data, and the r pieces of sub-data are separately processed by the neural network layer in the machine learning model. In other words, the processing process of the entire first data is divided into the tasks of sending the r pieces of sub-data, the tasks of processing the r pieces of sub-data, and the tasks of sending the processing results of the r pieces of sub-data. The time occupied by the tasks of sending the r pieces of sub-data and the time occupied by the tasks of sending the processing results of the r pieces of sub-data can overlap the time occupied by the tasks of processing the r pieces of sub-data. This helps shorten time consumed in one data processing process of the first data. In addition, the first parameter indicates the network status of the communication network used to send the sub-data, and the second parameter indicates the load status of the communication node configured to process the sub-data. In this case, the value of r is determined based on the network status and/or the data processing load status of the communication node. This helps obtain a value of r that satisfies an actual situation. In this way, time consumed in one data processing process of the entire first data is further shortened.

The value of r is determined based on the first start duration, the first duration, the second start duration, and the second duration. Depending on the first start duration, the first duration, the second start duration, and the second duration, time consumed in each phase of one data processing process of the entire first data can be accurately reflected. This helps obtain optimal r, to further shorten time consumed in one data processing process of the entire first data.

The three target functions (the first target function, the second target function, and the third target function) indicate the total duration consumed in obtaining the processing results of the r pieces of sub-data. The constraint condition of the first target function, the constraint condition of the second target function, and the constraint condition of the third target function are different, that is, a process of determining the value of r is divided into three cases. The foregoing three cases are separately described by using the first target function and the constraint condition of the first target function, the second target function and the constraint condition of the second target function, and the third target function and the constraint condition of the third target function, to determine the value of r at a finer level. This helps obtain a better solution of r, and helps further shorten time consumed in one data processing process of the entire first data.

505: Obtain a processing result of the first data.

In embodiments of this application, after determining the value of r, the first communication node may divide the first data into the r pieces of sub-data, and the first communication node may send the r pieces of sub-data to each second communication node (that is, execute the tasks of sending the r pieces of sub-data). Each second communication node processes each piece of sub-data of the r pieces of sub-data (that is, executes the tasks of processing the r pieces of sub-data). Each second communication node further sends a processing result of each piece of sub-data of the r pieces of sub-data to the first communication node (that is, executes the tasks of sending the processing results of the r pieces of sub-data). A relationship between the time occupied by the tasks of sending the r pieces of sub-data, the time occupied by the tasks of processing the r pieces of sub-data, and the time occupied by the tasks of sending the processing results of the r pieces of sub-data is presented in the descriptions of the foregoing steps. Details are not described herein again.

Optionally, when the first communication node sends the sub-data to the second communication node, an all to all communication mode may be used. Correspondingly, when the second communication node sends the processing result of the sub-data to the first communication node, an all to all communication mode may be used.

Optionally, if the first neural network module is a MoE module, after the first communication node obtains the first data, a gate neural network layer in the MoE module determines a second communication node on which a neural network layer is deployed and processes the first data. In other words, each piece of sub-data of the r pieces of sub-data needs to be sent to each second communication node determined by the gate neural network layer.

After obtaining the processing results of the r pieces of sub-data, the first communication node may combine the processing results of the r pieces of sub-data to obtain the processing result of the first data, where the processing result of the first data is used to obtain a processing result of the second data, and the processing result of the second data is a processing result obtained by processing the second data through the entire first machine learning model.

In embodiments of this application, the first machine learning model may include one or more first neural network modules. Optionally, the first machine learning model may further include a second neural network module. If the processing result of the first data obtained in step 505 is a processing result generated through the last neural network module in the first machine learning model, the processing result of the first data may also be determined as the processing result of the second data.

In another case, after obtaining the processing result of the first data, the first communication node may send the processing result of the first data to a communication node on which another neural network module of the first machine learning model is deployed, to continue to process the processing result of the first data through the another neural network module of the first machine learning model, to further obtain the processing result of the second data output by the entire first machine learning model.

It should be noted that, if the first machine learning model includes a plurality of first neural network modules, at least one first neural network module in the plurality of first neural network modules may process data according to the method shown in step 501 to step 505. This may be specifically flexibly set with reference to an actual situation. This is not limited herein.

2. Training phase

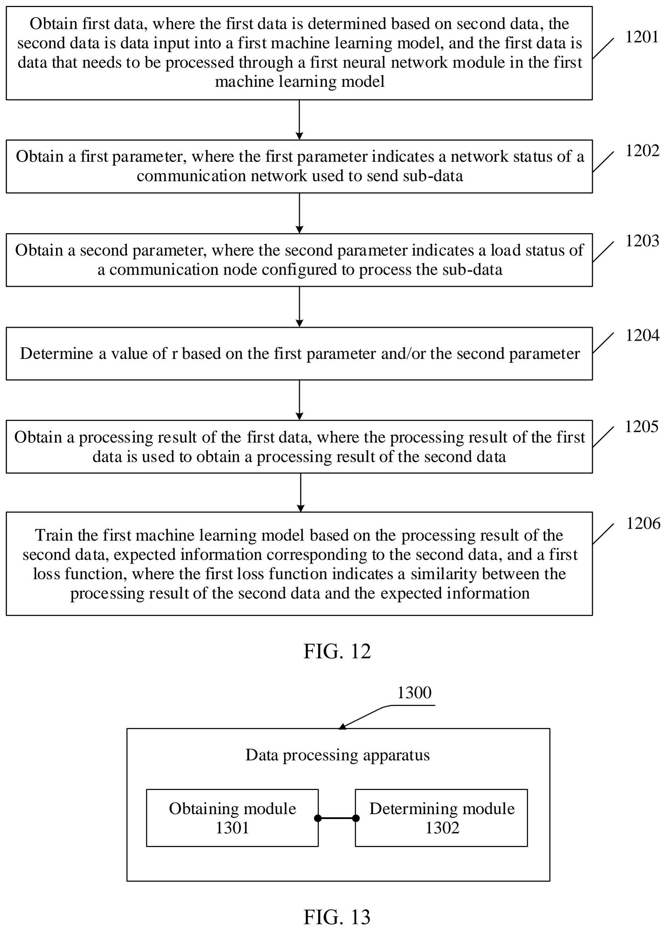

In embodiments of this application, the training phase describes a process in which the training apparatus 310 trains the first machine learning model/rule 301 based on training data in a database 220. Specifically, refer to FIG. 12. FIG. 12 is a schematic flowchart of a data processing method according to an embodiment of this application. The data processing method provided in embodiments of this application may include the following steps.

1201: Obtain first data, where the first data is determined based on second data, the second data is data input into a first machine learning model, and the first data is data that needs to be processed through a first neural network module in the first machine learning model.

1202: Obtain a first parameter, where the first parameter indicates a network status of a communication network used to send sub-data.

1203: Obtain a second parameter, where the second parameter indicates a load status of a communication node configured to process the sub-data.

1204: Determine a value of r based on the first parameter and/or the second parameter.

1205: Obtain a processing result of the first data, where the processing result of the first data is used to obtain a processing result of the second data.

In embodiments of this application, in a process in which the training apparatus trains the first machine learning model, the training apparatus can obtain a training data set. The training data set includes a plurality of pieces of training data, and one piece of training data may include the second data and expected information corresponding to the second data. The expected information corresponding to the second data may also be understood as correct information corresponding to the second data, and the expected information corresponding to the second data indicates information that is expected to be output by the first machine learning model after the second data is processed through the first machine learning model.

In the training phase of the first machine learning model, the "second data" may be understood as training data used to train the first machine learning model.

In the process in which the training apparatus trains the first machine learning model, the first neural network module in the first machine learning model is also deployed on one communication node cluster. When the first data arrives at the first neural network module in the first machine learning model, the first data may be obtained by a communication node (alternatively referred to as a "first communication node" for ease of description) in the training apparatus. In this case, the first communication node in the training apparatus may obtain the processing result of the first data by using step 1201 to step 1205. For specific implementations of step 1201 to step 1205, refer to the descriptions of the specific implementations of step 501 to step 505 in embodiments corresponding to FIG. 5. For meanings of nouns in step 1201 to step 1205, refer to the descriptions in embodiments corresponding to FIG. 5. Details are not described herein again.

1206: Train the first machine learning model based on the processing result of the second data, the expected information corresponding to the second data, and a first loss function, where the first loss function indicates a similarity between the processing result of the second data and the expected information.

In embodiments of this application, an objective of training the first machine learning model based on the first loss function includes improving the similarity between the processing result of the second data and the expected information. In other words, the objective of training the first machine learning model based on the first loss function includes enabling the processing result of the second data to be close to the expected information of the second data.

After obtaining the processing result of the second data, a communication node in the training apparatus may generate a function value of the first loss function based on the processing result of the second data and the expected information corresponding to the second data, perform gradient derivation on the function value of the first loss function, and update a parameter of the first machine learning model according to a backpropagation algorithm, to complete one time of training on the first machine learning model. The training apparatus repeatedly performs step 1201 to step 1205 until a convergence condition is met, to obtain the first machine learning model on which a training operation is performed.

The convergence condition may be that a convergence condition of the first loss function is met, or may be that a quantity of execution times of step 1201 to step 1205 reaches a preset quantity of times.

In a process of updating the parameter of the first machine learning model according to the backpropagation algorithm, the first machine learning model includes one or more first neural network modules, and a plurality of neural network layers included in each first neural network module are deployed on a plurality of communication nodes included in a same communication node cluster. Therefore, in the process of updating the parameter of the first neural network module in the first machine learning model according to the backpropagation algorithm, the method shown in step 501 to step 505 is also used. A difference lies in that the second data is replaced with "the function value of the first loss function". The first data is replaced with "a value that arrives at the first neural network module and that is obtained by performing gradient derivation on the function value of the first loss function according to the backpropagation algorithm", that is, after gradient derivation is performed on the function value of the first loss function, backpropagation is performed in the first machine learning model to continuously update the parameter of the first machine learning model, and the first data is replaced with "the value that arrives at the first neural network module in the foregoing backpropagation process".

In embodiments of this application, the data processing method provided in this application may be used in both the inference phase and the training phase of the first machine learning model. This extends an application scenario of this solution, shortens duration occupied for data processing in the inference phase and the training phase of the first machine learning model, and helps improve data processing efficiency in the inference phase and the training phase of the first machine learning model.

According to embodiments corresponding to FIG. 1 to FIG. 12, to better implement the foregoing solutions in embodiments of this application, the following further provides related devices configured to implement the foregoing solutions. Specifically, refer to FIG. 13. FIG. 13 is a diagram of a structure of an execution device according to an embodiment of this application. A data processing apparatus 1300 includes: an obtaining module 1301, configured to obtain first data; and a determining module 1302, configured to determine a value of r based on a first parameter and/or a second parameter, where r indicates to divide the first data into r pieces of sub-data, the r pieces of sub-data are separately processed by a neural network layer in a machine learning model, r is an integer greater than or equal to 1, the first parameter indicates a network status of a communication network used to send the sub-data, and the second parameter indicates a load status of a communication node configured to process the sub-data.

In a possible design, the first parameter includes first start duration and first duration that correspond to the communication network, the first start duration indicates duration from determining a data sending task to executing the data sending task, and the first duration indicates duration required for sending data of a first data amount. The second parameter includes second start duration and second duration, the second start duration indicates duration from determining a data processing task to executing the data processing task, the data processing task indicates processing data through the neural network layer in the machine learning model, and the second duration indicates duration required for processing data of a second data amount through the neural network layer in the machine learning model.

In a possible design, the determining module 1302 is specifically configured to solve a target function based on the first parameter and/or the second parameter, to determine the value of r, where the target function indicates total duration consumed in obtaining processing results of the r pieces of sub-data, and a constraint condition of the target function is related to time occupied by tasks of sending the sub-data and time occupied by tasks of processing the sub-data.

In a possible design, the target function includes one or more of a first target function, a second target function, or a third target function. A constraint condition of the first target function includes that time occupied by a task of sending one piece of sub-data is greater than or equal to time occupied by a task of processing the piece of sub-data. A constraint condition of the second target function includes that time occupied by a task of sending one piece of sub-data is less than time occupied by a task of processing the piece of sub-data, and first time is not a subset of second time, where the first time includes the time occupied by the tasks of processing the r pieces of sub-data, and the second time includes the time occupied by the tasks of sending the r pieces of sub-data and time occupied by tasks of sending the processing results of the r pieces of sub-data. A constraint condition of the third target function includes that time occupied by a task of sending one piece of sub-data is less than time occupied by a task of processing the piece of sub-data, and the first time is a subset of the second time.

In a possible design, the machine learning model includes at least one neural network module, and a plurality of neural network layers included in a first neural network module in the at least one neural network module are deployed in a same communication node cluster; and for a plurality of communication nodes included in the communication node cluster, first parameters are the same and second parameters are the same.

In a possible design, the first duration indicates duration required for sending the data of the first data amount in an all to all (all to all) communication mode.

In a possible design, the machine learning model is a mixture of expert MoE model, and the second duration indicates duration required for processing the data of the second data amount through an expert (expert) neural network layer in the MoE model.

In a possible design, the first parameter is obtained through statistics collection on a plurality of data sending tasks that are executed in an all to all communication mode, and data sending tasks with different data amounts exist in the plurality of data sending tasks.

In a possible design, the second parameter is obtained through statistics collection on a plurality of data processing tasks that are executed through the neural network layer in the machine learning model, and data of different data amounts is processed in the plurality of data processing tasks.

In a possible design, that the r pieces of sub-data are separately processed by the neural network layer in the machine learning model includes: In an inference phase of the machine learning model, the r pieces of sub-data are separately processed by the neural network layer in the machine learning model; or in a training phase of the machine learning model, the r pieces of sub-data are separately processed by the neural network layer in the machine learning model.

It should be noted that content such as information exchange and an execution process between the modules/units in the data processing apparatus 1300 is based on a same concept as the method embodiments corresponding to FIG. 2 to FIG. 12 in this application. For specific content, refer to the descriptions in the foregoing method embodiments of this application. Details are not described herein again.

An embodiment of this application further provides a communication node. The communication node includes a processor, and the processor is configured to perform the data processing method performed by the first communication node in embodiments corresponding to FIG. 2 to FIG. 12. Specific manners in which the processor performs the foregoing steps are based on a same concept as the method embodiments corresponding to FIG. 2 to FIG. 12 in this application, and technical effect brought by the specific manners are the same as that brought by the method embodiments corresponding to FIG. 2 to FIG. 12 in this application. For specific content, refer to the descriptions in the foregoing method embodiments of this application. Details are not described herein again.

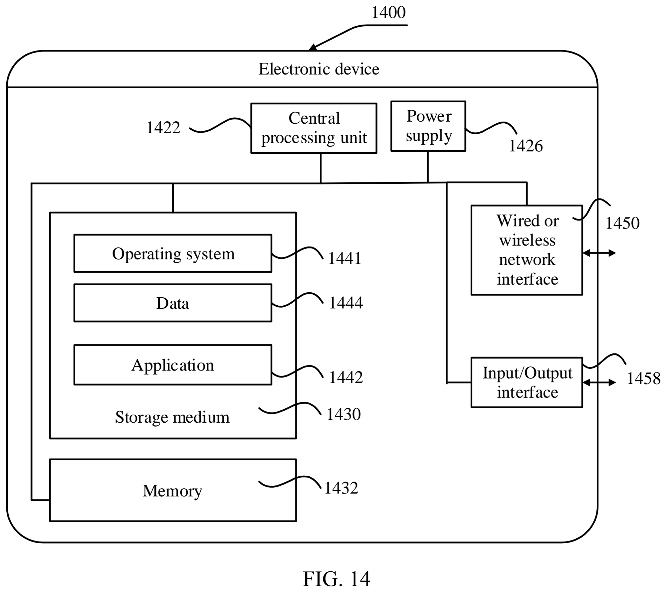

An embodiment of this application further provides an electronic device. The electronic device may include one or more communication nodes. For example, a communication node configured to deploy a first neural network module may be deployed in the foregoing electronic device. The electronic device may be represented as a server, or represented as a server cluster including a plurality of servers. Refer to FIG. 14. FIG. 14 is a diagram of a structure of a communication node according to an embodiment of this application. Specifically, an electronic device 1400 may vary greatly due to different configurations or performance, and may include one or more central processing units (central processing units, CPUs) 1422 (for example, one or more processors) and a memory 1432, a storage medium 1430 (for example, one or more mass storage devices) of one or more applications 1442 or data 1444. The memory 1432 and the storage medium 1430 may be transient storage or persistent storage. A program stored in the storage medium 1430 may include one or more modules (not shown in the figure), and each module may include a series of instruction operations performed on a training device. Further, the central processing unit 1422 may be configured to communicate with the storage medium 1430, and perform, on the electronic device 1400, the series of instruction operations in the storage medium 1430.

The electronic device 1400 may further include one or more power supplies 1426, one or more wired or wireless network interfaces 1450, one or more input/output interfaces 1458, and/or one or more operating systems 1441, for example, Windows ServerTM, Mac OS XTM, UnixTM, LinuxTM, and FreeBSDTM.

In this embodiment of this application, the central processing unit 1422 is configured to perform the data processing method performed by the first communication node in embodiments corresponding to FIG. 2 to FIG. 12. Specifically, specific manners in which the central processing unit 1422 performs the foregoing steps are based on a same concept as the method embodiments corresponding to FIG. 2 to FIG. 12 in this application, and technical effect brought by the specific manners are the same as that brought by the method embodiments corresponding to FIG. 2 to FIG. 12 in this application. For specific content, refer to the descriptions in the foregoing method embodiments of this application. Details are not described herein again.

An embodiment of this application further provides a computer-readable storage medium. The computer-readable storage medium stores a program for signal processing. When the program is run on a computer, the computer is enabled to perform the steps performed by the first communication node in the methods described in embodiments shown in FIG. 2 to FIG. 12.

An embodiment of this application further provides a computer program product. When the computer program product runs on a computer, the computer is enabled to perform the steps performed by the first communication node in the methods described in embodiments shown in FIG. 2 to FIG. 12.

Specifically, the communication node or the data processing apparatus provided in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the data processing methods described in embodiments shown in FIG. 2 to FIG. 12. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

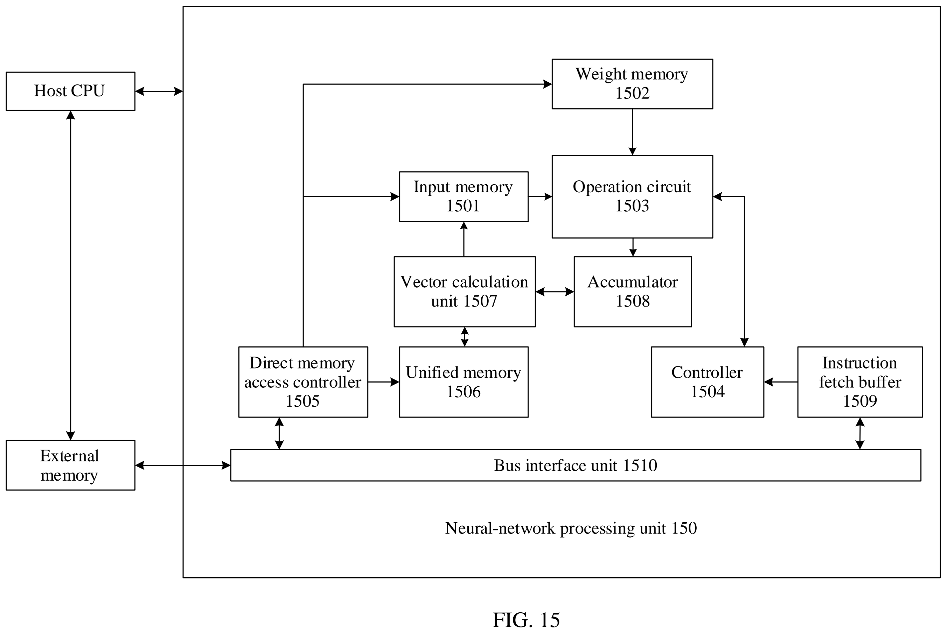

Specifically, refer to FIG. 15. FIG. 15 is a diagram of a structure of a chip according to an embodiment of this application. The chip may be represented as a neural-network processing unit NPU 150. The NPU 150 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of process engines (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and buffers the data on each PE in the operation circuit. The operation circuit fetches data of the matrix A from an input memory 1501, performs a matrix operation on the data of the matrix A and the matrix B, to obtain a partial result or a final result of the matrix, and stores the result in an accumulator (accumulator) 1508.

A unified memory 1506 is configured to store input data and output data. Weight data is directly transferred to the weight memory 1502 by using a direct memory access controller (Direct Memory Access Controller, DMAC) DMAC 1505. The input data is also transferred to the unified memory 1506 by using the DMAC.

A BIU, bus interface unit, that is, a bus interface unit 1510, is configured for interaction between an AXI bus and the DMAC and interaction between the AXI bus and an instruction fetch buffer (Instruction Fetch Buffer, IFB) 1509.

The bus interface unit 1510 (Bus Interface Unit, BIU for short) is configured to obtain an instruction from an external memory by the instruction fetch buffer 1509, and is further configured to obtain original data of the input matrix A or the weight matrix B from the external memory by the direct memory access controller 1505.

The DMAC is mainly configured to transfer input data in the external memory DDR to the unified memory 1506, transfer weight data to the weight memory 1502, or transfer input data to the input memory 1501.

A vector calculation unit 1507 includes a plurality of arithmetic processing units. When necessary, the vector calculation unit 1507 performs further processing on an output of the arithmetic circuit, for example, vector multiplication, vector addition, an exponential operation, a logarithmic operation, and value comparison. The vector calculation unit 1507 is mainly used for non-convolutional/fully connected layer network calculation in a neural network, such as batch normalization (batch normalization), pixel-level summation, and upsampling of a feature map.

In some implementations, the vector calculation unit 1507 can store a processed output vector in the unified memory 1506. For example, the vector calculation unit 1507 may apply a linear function and/or a non-linear function to the output of the operation circuit 1503, for example, perform linear interpolation on a feature map extracted by a convolutional layer, or for another example, accumulate value vectors to generate an activation value. In some implementations, the vector calculation unit 1507 generates a normalized value, a pixel-level sum, or both. In some implementations, the processed output vector can be used as an activation input to the operation circuit 1503, for example, to be used in a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private to a hardware architecture of the NPU.

An operation at each layer in the first machine learning model shown in the foregoing embodiments may be performed by the operation circuit 1503 or the vector calculation unit 1507.

The processor mentioned anywhere above may be a general-purpose central processing unit, a microprocessor, an ASIC, or one or more integrated circuits configured to control program execution of the foregoing method.

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments, In addition, in the accompanying drawings of the apparatus embodiments provided by this application, connection relationships between modules indicate that the modules have communication connections with each other, which may be specifically implemented as one or more communications buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the foregoing embodiments, all or some of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A data processing method, wherein the method comprises:

   obtaining first data; and
   determining a value of r based on a first parameter and/or a second parameter, wherein r indicates to divide the first data into r pieces of sub-data, the r pieces of sub-data are separately processed by a neural network layer in a machine learning model, r is an integer greater than or equal to 1, the first parameter indicates a network status of a communication network used to send the sub-data, and the second parameter indicates a load status of a communication node configured to process the sub-data.

2. The method according to claim 1, wherein the first parameter comprises first start duration and first duration that correspond to the communication network, the first start duration indicates duration from determining a data sending task to executing the data sending task, and the first duration indicates duration required for sending data of a first data amount; and
   the second parameter comprises second start duration and second duration, the second start duration indicates duration from determining a data processing task to executing the data processing task, the data processing task indicates processing data through the neural network layer in the machine learning model, and the second duration indicates duration required for processing data of a second data amount through the neural network layer in the machine learning model.

3. The method according to claim 1 or 2, wherein determining the value of r based on the first parameter and/or the second parameter comprises:
   solving a target function based on the first parameter and/or the second parameter, to determine the value of r, wherein the target function indicates total duration consumed in obtaining processing results of the r pieces of sub-data, and a constraint condition of the target function is related to time occupied by tasks of sending the sub-data and time occupied by tasks of processing the sub-data.

4. The method according to claim 3, wherein the target function comprises one or more of a first target function, a second target function, or a third target function, wherein

a constraint condition of the first target function comprises that time occupied by a task of sending one piece of sub-data is greater than or equal to time occupied by a task of processing the piece of sub-data; a constraint condition of the second target function comprises that time occupied by a task of sending one piece of sub-data is less than time occupied by a task of processing the piece of sub-data, and first time is not a subset of second time, wherein the first time comprises the time occupied by the tasks of processing the r pieces of sub-data, and the second time comprises the time occupied by the tasks of sending the r pieces of sub-data and time occupied by tasks of sending the processing results of the r pieces of sub-data; and a constraint condition of the third target function comprises that time occupied by a task of sending one piece of sub-data is less than time occupied by a task of processing the piece of sub-data, and the first time is a subset of the second time.

5. The method according to claim 1 or 2, wherein the machine learning model comprises at least one neural network module, and a plurality of neural network layers comprised in a first neural network module in the at least one neural network module are deployed in a same communication node cluster; and for a plurality of communication nodes comprised in the communication node cluster, first parameters are the same and second parameters are the same.

6. The method according to claim 2, wherein the first duration indicates duration required for sending the data of the first data amount in an all to all (all to all) communication mode.

7. The method according to claim 6, wherein the machine learning model is a mixture of expert MoE model, and the second duration indicates duration required for processing the data of the second data amount through an expert (expert) neural network layer in the MoE model.

8. The method according to claim 1 or 2, wherein the first parameter is obtained through statistics collection on a plurality of data sending tasks that are executed in an all to all communication mode, and data sending tasks with different data amounts exist in the plurality of data sending tasks.

9. The method according to claim 1 or 2, wherein the second parameter is obtained through statistics collection on a plurality of data processing tasks that are executed through the neural network layer in the machine learning model, and data of different data amounts is processed in the plurality of data processing tasks.

10. The method according to claim 1 or 2, wherein that the r pieces of sub-data are separately processed by the neural network layer in the machine learning model comprises:
in an inference phase of the machine learning model, the r pieces of sub-data are separately processed by the neural network layer in the machine learning model; or in a training phase of the machine learning model, the r pieces of sub-data are separately processed by the neural network layer in the machine learning model.

11. A data processing apparatus, wherein the apparatus comprises:

an obtaining module, configured to obtain first data; and
a determining module, configured to determine a value of r based on a first parameter and/or a second parameter, wherein r indicates to divide the first data into r pieces of sub-data, the r pieces of sub-data are separately processed by a neural network layer in a machine learning model, r is an integer greater than or equal to 1, the first parameter indicates a network status of a communication network used to send the sub-data, and the second parameter indicates a load status of a communication node configured to process the sub-data.

12. The apparatus according to claim 11, wherein the first parameter comprises first start duration and first duration that correspond to the communication network, the first start duration indicates duration from determining a data sending task to executing the data sending task, and the first duration indicates duration required for sending data of a first data amount; and
the second parameter comprises second start duration and second duration, the second start duration indicates duration from determining a data processing task to executing the data processing task, the data processing task indicates processing data through the neural network layer in the machine learning model, and the second duration indicates duration required for processing data of a second data amount through the neural network layer in the machine learning model.

13. The apparatus according to claim 11 or 12, wherein
the determining module is specifically configured to solve a target function based on the first parameter and/or the second parameter, to determine the value of r, wherein the target function indicates total duration consumed in obtaining processing results of the r pieces of sub-data, and a constraint condition of the target function is related to time occupied by tasks of sending the sub-data and time occupied by tasks of processing the sub-data.

14. The apparatus according to claim 13, wherein the target function comprises one or more of a first target function, a second target function, or a third target function, wherein

a constraint condition of the first target function comprises that time occupied by a task of sending one piece of sub-data is greater than or equal to time occupied by a task of processing the piece of sub-data;
a constraint condition of the second target function comprises that time occupied by a task of sending one piece of sub-data is less than time occupied by a task of processing the piece of sub-data, and first time is not a subset of second time, wherein the first time comprises the time occupied by the tasks of processing the r pieces of sub-data, and the second time comprises the time occupied by the tasks of sending the r pieces of sub-data and time occupied by tasks of sending the processing results of the r pieces of sub-data; and
a constraint condition of the third target function comprises that time occupied by a task of sending one piece of sub-data is less than time occupied by a task of processing the piece of sub-data, and the first time is a subset of the second time.

15. The apparatus according to claim 11 or 12, wherein the machine learning model comprises at least one neural network module, and a plurality of neural network layers comprised in a first neural network module in the at least one neural network module are deployed in a same communication node cluster; and for a plurality of communication nodes comprised in the communication node cluster, first parameters are the same and second parameters are the same.

16. The apparatus according to claim 12, wherein the first duration indicates duration required for sending the data of the first data amount in an all to all (all to all) communication mode.

17. The apparatus according to claim 16, wherein the machine learning model is a mixture of expert MoE model, and the second duration indicates duration required for processing the data of the second data amount through an expert (expert) neural network layer in the MoE model.

18. The apparatus according to claim 11 or 12, wherein the first parameter is obtained through statistics collection on a plurality of data sending tasks that are executed in an all to all communication mode, and data sending tasks with different data amounts exist in the plurality of data sending tasks.

19. The apparatus according to claim 11 or 12, wherein the second parameter is obtained through statistics collection on a plurality of data processing tasks that are executed through the neural network layer in the machine learning model, and data of different data amounts is processed in the plurality of data processing tasks.

20. The apparatus according to claim 11 or 12, wherein that the r pieces of sub-data are separately processed by the neural network layer in the machine learning model comprises:
in an inference phase of the machine learning model, the r pieces of sub-data are separately processed by the neural network layer in the machine learning model; or in a training phase of the machine learning model, the r pieces of sub-data are separately processed by the neural network layer in the machine learning model.

21. A communication node, comprising a processor, wherein
the processor is configured to perform the method according to any one of claims 1 to 10.

22. An electronic device, comprising a processor and a memory, wherein the processor is coupled to the memory;

the memory is configured to store a program; and
the processor is configured to perform the method according to any one of claims 1 to 10.

23. A computer-readable storage medium, wherein the computer-readable storage medium stores a program, and when the program is run on a computer, the computer is enabled to perform the method according to any one of claims 1 to 10.

FIG. 1

Intelligent information chain

Intelligent product and industry application

Translation/ Text analysis/...    Voice/Vision/Image/...

Data

Data processing:    Data training/Machine learning/ Deep learning    Searching/ Inference/ Decision making    ...

Infrastructure    Sensor    Intelligent chip    Basic platform    ...

IT value chain

EP 4 694 075 A1

30

First neural network module

Communication node 3

Neural network layer 5

Neural network layer 4

Neural network layer 1

Communication node 2

Neural network layer 5

Neural network layer 4

Neural network layer 1

Communication node 1

Neural network layer 3

Neural network layer 2

Neural network layer 1

FIG. 2

FIG. 3

| Duration occupied by a task of sending first data or sub-data | Duration occupied by a task of processing the first data or the sub-data | Duration occupied by a task of sending a processing result |
|---|---|---|

| (C, M) | (C, M) | (C, M) |
|---|---|---|

Total duration

| (C/2, M) | (C/2, M) | (C/2, M) | (C/2, M) |
|---|---|---|---|

| (C/2, M) | (C/2, M) |
|---|---|

Total duration

| (C/4, M) | (C/4, M) | (C/4, M) | (C/4, M) | (C/4, M) | (C/4, M) | (C/4, M) | (C/4, M) |
|---|---|---|---|---|---|---|---|

| (C/4, M) | (C/4, M) | (C/4, M) | (C/4, M) |
|---|---|---|---|

Total duration

The first data is divided into two pieces of sub-data

The first data is divided into four pieces of sub-data

The first data is not divided

FIG. 4

Obtain first data 501

Obtain a first parameter, where the first parameter indicates a network status of a communication network used to send sub-data 502

Obtain a second parameter, where the second parameter indicates a load status of a communication node configured to process the sub-data 503

Determine a value of r based on the first parameter and/or the second parameter 504

Obtain a processing result of the first data 505

FIG. 5

FIG. 6

FIG. 7

EP 4 694 075 A1

FIG. 8

EP 4 694 075 A1

D1, D2, D3, and D4 indicate time occupied by tasks of sending four pieces of sub-data
E1, E2, E3, and E4 indicate time occupied by tasks of processing the four pieces of sub-data
C1, C2, C3, and C4 indicate time occupied by tasks of sending processing results of the four pieces of sub-data

FIG. 9

D1, D2, D3, and D4 indicate time occupied by tasks of sending four pieces of sub-data
E1, E2, E3, and E4 indicate time occupied by tasks of processing the four pieces of sub-data
C1, C2, C3, and C4 indicate time occupied by tasks of sending processing results of the four pieces of sub-data

FIG. 10

D1, D2, D3, and D4 indicate time occupied by tasks of sending four pieces of sub-data
E1, E2, E3, and E4 indicate time occupied by tasks of processing the four pieces of sub-data
C1, C2, C3, and C4 indicate time occupied by tasks of sending processing results of the four pieces of sub-data

FIG. 11

Obtain first data, where the first data is determined based on second data, the second data is data input into a first machine learning model, and the first data is data that needs to be processed through a first neural network module in the first machine learning model — 1201

Obtain a first parameter, where the first parameter indicates a network status of a communication network used to send sub-data — 1202

Obtain a second parameter, where the second parameter indicates a load status of a communication node configured to process the sub-data — 1203

Determine a value of r based on the first parameter and/or the second parameter — 1204

Obtain a processing result of the first data, where the processing result of the first data is used to obtain a processing result of the second data — 1205

Train the first machine learning model based on the processing result of the second data, expected information corresponding to the second data, and a first loss function, where the first loss function indicates a similarity between the processing result of the second data and the expected information — 1206

FIG. 12

1300

Data processing apparatus

Obtaining module
1301

Determining module
1302

FIG. 13

1400

Electronic device

1422

Central
processing unit

Power
supply

1426

Operating system

1441

Data

1444

Application

1442

Storage medium

1430

Memory

1432

Wired or
wireless
network
interface

1450

Input/Output
interface

1458

FIG. 14

Host CPU

External memory

Weight memory
1502

Input memory
1501

Operation circuit
1503

Vector calculation
unit 1507

Accumulator
1508

Direct memory
access controller
1505

Unified memory
1506

Controller
1504

Instruction
fetch buffer
1509

Bus interface unit 1510

Neural-network processing unit 150

FIG. 15

## INTERNATIONAL SEARCH REPORT

| International application No. |
| --- |
| **PCT/CN2023/091756** |

### A.    CLASSIFICATION OF SUBJECT MATTER

H04L47/10(2022.01)i;  G06N3/02(2006.01)i

According to International Patent Classification (IPC) or to both national classification and IPC

### B.    FIELDS SEARCHED

Minimum documentation searched (classification system followed by classification symbols)

IPC: H04L G06N

Documentation searched other than minimum documentation to the extent that such documents are included in the fields searched

Electronic data base consulted during the international search (name of data base and, where practicable, search terms used)

WPABS, ENTXTC, CNTXT, ENTXT, CNKI: 参数, 切分, 分割, 数据块, 子数据, 神经网络, 网络, 状况, 状态, 节点, 负载, 任务, 启动, 时长, 约束, 机器学习模型, 处理; parameters, slices, splits, data blocks, sub-data, machine learning models, condition, state, node, load, task, launch, duration, constraints, processing, neural networks

### C.    DOCUMENTS CONSIDERED TO BE RELEVANT

| Category* | Citation of document, with indication, where appropriate, of the relevant passages | Relevant to claim No. |
| --- | --- | --- |
| Y | CN 109754060 A (ALIBABA GROUP HOLDING LTD.) 14 May 2019 (2019-05-14) description, paragraphs 0047-0071 | 1-23 |
| Y | CN 109522117 A (SHENZHEN YUANSHI TECHNOLOGY CO., LTD.) 26 March 2019 (2019-03-26) description, paragraphs 0012-0021 | 1-23 |
| A | CN 114285766 A (TENCENT TECHNOLOGY (SHENZHEN) CO., LTD.) 05 April 2022 (2022-04-05) entire document | 1-23 |
| A | CN 115131593 A (HUAWEI TECHNOLOGIES CO., LTD.) 30 September 2022 (2022-09-30) entire document | 1-23 |
| A | CN 115658268 A (VIVO COMMUNICATION TECHNOLOGY CO., LTD.) 31 January 2023 (2023-01-31) entire document | 1-23 |
| A | US 2021117776 A1 (BAIDU USA LLC.) 22 April 2021 (2021-04-22) entire document | 1-23 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/091756** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022405579 A1 (GOOGLE LLC.) 22 December 2022 (2022-12-22)<br>entire document | 1-23 |

Form PCT/ISA/210 (second sheet) (July 2022)

**INTERNATIONAL SEARCH REPORT**
Information on patent family members

International application No.

**PCT/CN2023/091756**

| Patent document cited in search report | | | Publication date (day/month/year) | Patent family member(s) | | | Publication date (day/month/year) |
|---|---|---|---|---|---|---|---|
| CN | 109754060 | A | 14 May 2019 | None | | | |
| CN | 109522117 | A | 26 March 2019 | None | | | |
| CN | 114285766 | A | 05 April 2022 | None | | | |
| CN | 115131593 | A | 30 September 2022 | None | | | |
| CN | 115658268 | A | 31 January 2023 | None | | | |
| US | 2021117776 | A1 | 22 April 2021 | CN | 112699991 | A | 23 April 2021 |
| US | 2022405579 | A1 | 22 December 2022 | WO | 2021178916 | A1 | 10 September 2021 |

Form PCT/ISA/210 (patent family annex) (July 2022)